(19) 

**Europäisches Patentamt**
**European Patent Office**
**Office européen des brevets**

(11) **EP 4 745 625 A2**

(12) **EUROPEAN PATENT APPLICATION**

(43) Date of publication:
**20.05.2026   Bulletin 2026/21**

(21) Application number: **26169292.5**

(22) Date of filing: **26.03.2024**

(51) International Patent Classification (IPC):
***G01S 17/89*** (2020.01)

(52) Cooperative Patent Classification (CPC):
**G01C 21/1652; G01C 21/30; G01C 21/3848;**
**G01S 17/89; G05D 1/242; G05D 1/243;**
**G05D 1/245; G05D 1/246;** G05D 2109/10;
G05D 2111/10; G05D 2111/17; G05D 2111/52;
G05D 2111/54

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **30.03.2023   US 202318192684**

(62) Document number(s) of the earlier application(s) in
accordance with Art. 76 EPC:
**24719418.6 / 4 689 555**

(71) Applicant: **DEKA Products Limited Partnership**
**Manchester, NH 03101 (US)**

(72) Inventors:
• **CHANG, Yu-Hsuan**
**Santa Clara, 95051 (US)**

• **PATEL, Kunj P.**
**Manchester, 03101 (US)**
• **BOGGAVARAPU, Sai Ravi Teja**
**Woburn, 01801 (US)**

(74) Representative: **EIP**
**Fairfax House**
**15 Fulwood Place**
**London WC1V 6HU (GB)**

Remarks:
This application was filed on 30-03-2026 as a
divisional application to the application mentioned
under INID code 62.

(54) **SYSTEM AND METHOD FOR LOCALIZING AN AUTONOMOUS VEHICLE**

(57)     A method of localizing a vehicle is disclosed. The method comprises: isolating data, from offline data and real-time data, that are relevant to a current GPS-determined position of the vehicle, determining a global pose and a confidence level associated with the global pose based on matching map features discovered in the offline data with real-time features discovered in the real-time data, computing a local pose based on comparing a current pose and a previous pose, predicting future characteristics of the vehicle by executing a model and computing a final pose and an estimated confidence level based on the global pose, the local pose, and the future characteristics.

FIG. 8

**Description**

CROSS REFERENCE TO RELATED APPLICATIONS

None.

BACKGROUND

This disclosure relates generally to localization. More specifically, this disclosure pertains to localizing autonomous vehicles.

An autonomous vehicle needs to understand its surroundings to determine its locations. Accurate localization of the autonomous vehicle is required to prevent collisions between the autonomous vehicle and anything in its path, among other reasons. Current highly accurate localization systems employ an expensive suite of sensors that are also computationally and power demanding. Less expensive systems can sacrifice accuracy in a complicated environment by making assumptions about the environment to simplify data collection and lower processing demands. GPS data can be used to provide basic navigation information such as turn-by-turn instructions, but fails when vehicle location accuracy of less than the accuracy of the GPS is required. Map-based localization, allowing localization of the vehicle relative to a high resolution image-based map, is an alternative to GPS-based localization. This technique requires a great deal of storage for the map. Most common applications for localization include localizing with respect to the knowledge of which road the autonomous vehicle is traveling (road level localization), localizing with respect to the lateral and longitudinal positions of the autonomous vehicle in the host lane (ego-lane level localization), and localizing with respect to the knowledge of the lane in which the autonomous vehicle is traveling and the lateral position of the autonomous vehicle on the road (lane-level localization). There are solutions available for each of these applications.

For example, road level localization solutions include map matching methods that further include deterministic models and probabilistic models. Deterministic models include geometric and pattern-based models. Probabilistic models include hidden Markov model, conditional random field, particle filter, weighted graph, and multiple hypothesis. Deterministic models are unable to handle uncertainties and ambiguities. Probabilistic models require more computations than deterministic models, possibly delaying timely results and raising power consumption issues that have to be overcome. For some applications, road level localization is insufficient to maintain vehicle safety. Obstacle avoidance and overtaking are two examples where road level localization could be lacking.

Ego-lane level localization involves two general approaches: the model approach and the learning approach. In the model approach, pre-processing is applied to a frame of data collected by, for example, LIDAR and cameras, to enhance features of interest, reduce clutter such as shadows, and prune irrelevant artifacts. Following pre-processing, what are left are data that contain lane markings that are distinguished from the rest of the data during feature extraction. Feature extraction can involve filters based on gradient detection, or edges that are not in the vertical direction, or based on reflectivity. Following feature extraction, a fitting procedure presents a high-level representation of the travel path using a lane model. There are various types of lane models: parametric model (assuming a lane geometry), semi-parametric model (parameterization by control points), and non-parametric model (assuming a continuous but not necessarily differentiable path). No model is correct at all times. Following the fitting procedure is a tracking procedure in which tracking from a previous frame of data improves knowledge of the present frame of data. The learning approach involves deep learning algorithms such as, for example, recurrent feature-shift aggregator for lane detection, key points estimation and point instance segmentation approach for land detection, learning lightweight lane detection CNNs by self attention distillation, towards lightweight lane detection by optimizing spatial embedding, and a top-to-down lane detection framework based on conditional convolution. In benchmark testing, the accuracy of these models is dependent upon which benchmark database is being used.

Lane-level localization methods include map-aided and landmark approaches. Some map-aided methods align perceived (with sensors) environment landmarks, such as lane lines, with landmarks stored in a map. In some methods, a LIDAR sensor is used to detect lane markings. In a landmark approach, road level features are extracted from images and assessed to determine the number of lanes around the vehicle and the lane where the vehicle is traveling. The number of lanes is determined using a probabilistic formulation.

What is needed is a generalized localization system that is resource conservative and provides timely information about the location of an autonomous delivery vehicle.

SUMMARY

The system of the present teachings for providing continuous localization for an autonomous vehicle includes at least one processor executing in at least one autonomous vehicle. The method of the present teachings includes a lane-level localization-type process in which the at least one processor receives, processes, and provides offline (map) data, and receives and processes real-time (sensor) data. The map and sensor data, although possibly collected by the same vehicle, are collected during different navigation time periods. Sensors such as, but not limited to, LIDAR, GPS, and optical devices provide point cloud data, geographic data, and stereo and monocular data. Other types of sensors and data are contemplated by the present teachings. During the localization process, previously-collected map data are accessed as the real-time data are collected. Data that are relevant to the current GPS-determined position of the autonomous vehicle are isolated. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions. One general aspect includes a method for localizing an autonomous vehicle. The method also includes organizing a first map associated with a current location of the autonomous vehicle, forming current organized data; organizing at least one second map associated with at least one potential location that the autonomous vehicle could navigate to, forming potential location organized data; updating the current organized data as the autonomous vehicle navigates based at least on the potential location organized data and the current location; selectively updating the potential location organized data based at least on a movement direction, a movement speed, the potential location organized data, and the current location of the autonomous vehicle; filtering real-time data received by the autonomous vehicle forming real-time data; scan matching the processed current organized data and the real-time data forming matched map points based at least on dynamic thresholds; rejecting outlying data from the matched map points based on feature properties, dynamic thresholds, and an outlier determination algorithm, forming a pose estimation; and correcting the pose estimation based at least on planar features associated with the current location, forming a localized pose. Other embodiments of this aspect include corresponding computer systems, apparatus, and computer programs recorded on one or more computer storage devices, each configured to perform the actions of the methods.

Implementations may include one or more of the following features. The method as may include: receiving the first map from a source remote to the autonomous vehicle. The method as may include: accessing the first map from a database stored local to the autonomous vehicle. The first map may include: an 80m square. The method as may include: receiving the at least one second map from a source remote to the autonomous vehicle. The method as may include: accessing the at least one second map from a database stored local to the autonomous vehicle. The second map may include: at least one 80m square sharing a border with the first map. Selectively updating may include: determining if the autonomous vehicle is located in a border region between the first map and the at least one second map, and updating the potential location organized data when the autonomous vehicle navigates outside of the border region and the first map. The border region may include: a width that is dynamically determined based at least on a speed of the autonomous vehicle, a number and a type of obstacles surrounding the autonomous vehicle, and/or characteristics of an environment surrounding the autonomous vehicle. The filtering real-time data may include: downsampling the real-time data according to pre-selected criteria forming downsampled data. The pre-selected criteria may include: user-defined criteria. The pre-selected criteria may include: default criteria. The pre-selected criteria may include: dynamically-determined criteria. The pre-selected criteria may include: a pre-selected density. The method as may include: segregating the downsampled real-time data into blocks of a pre-selected size. The method as may include: forming real-time planes that are grown to outliers from a plurality of scans of the downsampled real-time data. The method as may include: determining discontinuities in the real-time planes, and removing points that are part of the discontinuities. The method as may include: segregating the first map and the at least one second map into planar points and non-planar points. The method as may include: removing the non-planar points. The method as may include: identifying planar points as points belonging to non-ground planes. The method as may include: identifying planar points including: (a) selecting a random point from the downsampled data; (b) locating point neighbors of the random point; (c) identifying the planar points in the downsampled data as points that lie on a planar plane formed by the random point and the point neighbors, if any; (d) identifying the non-planar points as not the planar points; and (e) repeating steps (a)-(d) until (1) there are no more of the downsampled data to be examined, or a pre-selected number of the planar planes has been achieved, or a pre-selected number of iterations of steps (a)-(d) has been executed. The method as may include: forming real-time planes that are grown to outliers from a plurality of scans of the downsampled real-time data, and matching the real-time planes with the planar planes. Organizing the first map may include: creating a k-dimensional tree from the first map. Organizing the first map may include: creating, by a parallel processor, a plurality of k-dimensional trees from the first map and the at least one second map. Organizing the first map data set and the at least one second map may include: creating a plurality of k-dimensional trees from the first map data set and the at least one second map. Implementations of the described techniques may include hardware, a method or process, or computer software on a computer-accessible medium.

One general aspect includes a method for localizing an autonomous vehicle. The method also includes receiving and processing, by at least one processor, offline (map) data and real-time (sensor) data. The method also includes isolating data, from the offline data and the real-time data, that are relevant to a current GPS-determined position of the autonomous vehicle. The method also includes determining a global pose and a confidence level associated with the global pose based at least on matching map features discovered in the offline data with real-time features discovered in the real-time data. The method also includes continuously computing, as the autonomous vehicle navigates, a local pose based at least on a comparison between a current pose and a previous pose. The method also includes predicting future characteristics of the autonomous vehicle by executing a model of movement of the autonomous vehicle. The method also includes continuously computing a final pose and an estimated confidence level associated with the autonomous vehicle based at least on the global pose, the local pose, and the future characteristics. Other embodiments of this aspect include corresponding computer systems, apparatus, and computer programs recorded on one or more computer storage devices, each configured to perform the actions of the methods.

Implementations may include one or more of the following features. The method as may include: collecting the offline data and the real-time data during different time periods. The method as may include: collecting, by a common vehicle, the offline data and the real-time data. The method as may include: collecting the real-time data by sensors including lidar, gps, and optical devices. Computing the local pose information may include: measuring linear and angular velocity of the autonomous vehicle; measuring a local heading of the autonomous vehicle; estimating, using data gathered by an image sensor, an image pose of the autonomous vehicle based at least on previous and current images of the autonomous vehicle; estimating, using data gathered by a laser sensor, a laser pose of the autonomous vehicle based at least on previous and current poses of the autonomous vehicle; and computing the local pose based at least on combining the linear and angular velocity, the local heading, the estimated image pose, and the estimated laser pose. The model may include: a constant velocity autonomous vehicle. The model may include: a movement model for the autonomous vehicle. The model may include: a dynamically-updated movement model for the autonomous vehicle. Continuously computing the final pose may include: submitting the global pose, the local pose, and the future characteristics to a bayesian state estimator. The bayesian estimator may include: an unscented Kalman filter. Implementations of the described techniques may include hardware, a method or process, or computer software on a computer-accessible medium.

One general aspect includes a system for localization of an autonomous vehicle. The system also includes at least one first processor configured to receive and filter sensor data and map data associated with the autonomous vehicle; a second processor configured to segregate sensor data features of interest in the filtered sensor data and map data features of interest the filtered map data; a third processor configured to match the sensor data features of interest with the map data features of interest; a fourth processor configured to perform registration on the matched data creating a global pose; a fifth processor gathering local pose information based at least on linear and angular velocity of the autonomous vehicle, a heading of the autonomous vehicle, an image pose estimation of the autonomous vehicle, and a laser pose estimate of the autonomous vehicle; a sixth processor predicting future motion of the autonomous vehicle; and a seventh processor computing a final pose of the autonomous vehicle based at least on the global pose, the local pose information and the future motion. Other embodiments of this aspect include corresponding computer systems, apparatus, and computer programs recorded on one or more computer storage devices, each configured to perform the actions of the methods.

Implementations may include one or more of the following features. The system as where the sensor data may include: LIDAR data, GPS data, and image data. The registration may include: an iterative closest point algorithm. 39, the system as where the predicting future motion may include: executing a model configured to represent behavior of the autonomous vehicle. The first processor may include: instructions executing to filter the map data: downsample the filtered sensor data creating downsampled data; (b) create submaps of the downsampled data; (c) select a random point from the downsampled data; (d) locate point neighbors of the random point; (e) identify planar points in the downsampled data as points that lie on a planar plane formed by the random point and the point neighbors, if any; (f) identify non-planar points as not the planar points; and (g) repeating steps (a)-(f) until (1) there are no more of the downsampled data to be examined, or a pre-selected number of the planar planes has been achieved, or a pre-selected number of iterations of steps (a)-(d) has been executed. The first processor may include: a ground plane processor determining ground planes from point cloud data received from a sensor, each of the ground planes being associated with a ground plane equation, the sensor having a sensor frame of reference; and a plane transform processor transforming the ground plane equation from the sensor frame of reference to a vehicle frame of reference associated with the autonomous vehicle. The ground plane processor may include: a median processor computing a median of at least two rings of the point cloud data; a point cloud filter filtering the point cloud data based at least on a distance of the points in the point cloud data from the median; a plane creation processor creating planes from the filtered point cloud data, each of the created planes having at least one azimuth angle; a plane growth processor growing the created planes from the point cloud data extending away from the autonomous vehicle along the at least one azimuth angle forming grown planes; and a selection processor choosing the ground planes from the grown planes based at least on an orientation and residual error of each of the created planes. The plane creation processor may include: executable code including computer instructions selecting a first point and a second point from a first ring of sensor data, the first point and the second point lying within boundaries formed by discontinuities in the point cloud data on the first ring, the first point having a first azimuth angle and the second point having a second azimuth angle; selecting a third point from a second ring of sensor data, the second ring being adjacent to the first ring, the third point having a third azimuth angle between the first azimuth angle and the second azimuth angle; and creating one of the planes including the first point, the second point, and the third point. The system as may include: executable code including computer instructions substituting a default plane when none of the ground planes can be determined. The system as may include: executable code including computer instructions removing the points from the point cloud data if the points exceed a pre-selected distance from the autonomous vehicle. The system as may include: executable code including computer instructions removing the points from the point cloud data if the points exceed a pre-selected height based at least on a vehicle height of the autonomous vehicle. The system as may include: executable code including computer instructions removing the points from the point cloud data if the points are within a pre-selected distance from the autonomous vehicle. Transforming the ground planes may include: executable code including computer instructions computing a unity vector from coefficients of the ground plane equation, the ground plane equation including $ax+by+cz+d=0$, the coefficients including a, b, and c, a constant including d; normalizing the d constant; transforming the a, b, c coefficients of the ground plane equation based on a rotation/translation matrix and the unity vector; and transforming the normalized d constant based on the normalized d constant, the rotation/translation matrix, the unity vector, and the transformed a, b, c coefficients. Implementations of the described techniques may include hardware, a method or process, or computer software on a computer-accessible medium.

## BRIEF DESCRIPTION OF THE DRAWINGS

Non-limiting and non-exhaustive aspects of the subject disclosure are described with reference to the following figures, wherein like reference numerals refer to like parts throughout the various views unless otherwise specified.

FIG. 1 is a schematic block diagram of the environment in which the system of the present teachings executes;
Fig. 1A is a pictorial representation of point cloud data ingested by the system of the present teachings;
Fig. 1B is a mosaic showing orientation of Figs. 1H and 1I;
Fig. 1C is a pictorial representation of the data block structure of the present teachings;
FIGs. 1D and 1E are graphical representations of odometry and inertial measurement unit geometry descriptions;
FIGs. 1F and 1G are schematic block diagrams of exemplary systems of the present teachings;
Figs. 1H and 1I are pictorial representations of the data block structure of the present teachings;
FIGs. 2A-2B represent a flow chart depicting flow and steps in accordance with various aspects of the present teachings;
FIGs. 3A-3C are pictorial representations of the system and method for off-line data gathering of the present teachings;
FIG. 4A is a flowchart of an overview of the real-time data gathering of the present teachings;
FIGs. 4B-4I are pictorial representations of the process depicted in the flowchart of FIG. 4A;
FIG. 5 is a schematic block diagram of an exemplary multi-processor system of the present teachings;
FIG. 5A is a pictorial representation of k-d tree searching enhancements of the present teachings;
FIGs. 5B-5D are pictorial representations of outlier rejection strategies of the present teachings;
FIGs. 6A and 6B are pictorial representations of pose correction of the present teachings;
FIG. 7 is a flowchart of a first exemplary configuration of the method of the present teachings; and
FIG. 8 is a flowchart of a second exemplary configuration of the method of the present teachings.

## DETAILED DESCRIPTION

In the following description, numerous specific details are set forth to provide a thorough understanding of various aspects and arrangements. One skilled in the relevant art will recognize, however, that the techniques described herein can be practiced without one or more of the specific details, or with other methods, components, materials, etc. In other instances, well known structures, materials, or operations may not be shown or described in detail to avoid obscuring certain aspects.

Reference throughout this specification to "an aspect," "an arrangement," or "a configuration" indicates that a particular feature, structure, or characteristic is described. Thus, appearances of phrases such as "in one aspect," "in one arrangement," "in a configuration," or the like in various places throughout this specification do not necessarily each refer to the same aspect, feature, configuration, or arrangement. Furthermore, the particular features, structures, and/or characteristics may be combined in any suitable manner.

To the extent used in the present disclosure and claims, the terms "component," "system," "platform," "layer," "selector," "interface," and the like are intended to refer to a computer-related entity or an entity related to an operational apparatus with one or more specific functionalities, wherein the entity may be either hardware, a combination of hardware and software, software, or software in execution. As an example, a component may be, but is not limited to being, a process running on a processor, a processor, an object, an executable, a thread of execution, a program, and/or a computer. By way of illustration and not limitation, both an application running on a server and the server itself can be a component. One or more components may reside within a process and/or thread of execution and a component may be localized on one computer and/or distributed between two or more computers. In addition, components may execute from various computer-readable media, device-readable storage devices, or machine-readable media having various data structures stored thereon. The components may communicate via local and/or remote processes such as in accordance with a signal having one or more data packets (e.g., data from one component interacting with another component in a local system, a distributed system, and/or across a network such as the Internet with other systems via the signal). As another example, a component can be an apparatus with specific functionality provided by mechanical parts operated by electric or electronic circuitry, which may be operated by a software or firmware application executed by a processor, wherein the processor can be internal or external to the apparatus and executes at least a part of the software or firmware application. As yet another example, a component can be an apparatus that provides specific functionality through electronic components without mechanical parts; the electronic components can include a processor therein to execute software or firmware that confers at least in part the functionality of the electronic components.

To the extent used in the subject specification, terms such as "store," "storage," "data store," data storage," "database," and the like refer to memory components, entities embodied in a memory, or components comprising a memory. It will be appreciated that the memory components described herein can be either volatile memory or nonvolatile memory, or can include both volatile and nonvolatile memory.

In addition, the term "or" is intended to mean an inclusive "or" rather than an exclusive "or." That is, unless specified otherwise, or clear from context, "X employs A or B" is intended to mean any of the natural inclusive permutations. That is, if X employs A, X employs B, or X employs both A and B, then "X employs A or B" is satisfied under any of the foregoing instances. Moreover, articles "a" and "an" as used in the subject disclosure and claims should generally be construed to mean "one or more" unless specified otherwise or clear from context to be directed to a singular form.

The words "exemplary" and/or "demonstrative," to the extent used herein, mean serving as an example, instance, or illustration. For the avoidance of doubt, the subject matter disclosed herein is not limited by disclosed examples. In addition, any aspect or design described herein as "exemplary" and/or "demonstrative" is not necessarily to be construed as preferred or advantageous over other aspects or designs, nor is it meant to preclude equivalent exemplary structures and techniques known to those of ordinary skill in the art. Furthermore, to the extent that the terms "includes," "has," "contains," and other similar words are used in either the detailed description or the claims, such terms are intended to be inclusive, in a manner similar to the term "comprising" as an open transition word, without precluding any additional or other elements.

As used herein, the term "infer" or "inference" refers generally to the process of reasoning about, or inferring states of, the system, environment, user, and/or intent from a set of observations as captured via events and/or data. Captured data and events can include user data, device data, environment data, data from sensors, application data, implicit data, explicit data, etc. Inference can be employed to identify a specific context or action or can generate a probability distribution over states of interest based on a consideration of data and events, for example.

The disclosed subject matter can be implemented as a method, apparatus, or article of manufacture using standard programming and/or engineering techniques to produce software, firmware, hardware, or any combination thereof to control a computer to implement the disclosed subject matter. The term "article of manufacture," to the extent used herein, is intended to encompass a computer program accessible from any computer-readable device, machine-readable device, computer-readable carrier, computer-readable media, or machine-readable media. For example, computer-readable media can include, but are not limited to, a magnetic storage device, e.g., hard disk; floppy disk; magnetic strip(s); an optical disk (e.g., compact disk (CD), digital video disc (DVD), Blu-ray Disc™ (BD)); a smart card; a flash memory device (e.g., card, stick, key drive); a virtual device that emulates a storage device; and/or any combination of the above computer-readable media.

Generally, program modules include routines, programs, components, data structures, etc., that perform particular tasks or implement particular abstract data types. The illustrated embodiments of the subject disclosure may be practiced in distributed computing environments where certain tasks are performed by remote processing devices that are linked through a communications network. In a distributed computing environment, program modules can be located in both local and remote memory storage devices.

Computing devices can include at least computer-readable storage media, machine-readable storage media, and/or communications media. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media that can be used to store desired information. In this regard, the terms "tangible" or "non-transitory" herein as applied to storage, memory, or computer-readable media, are to be understood to exclude only propagating transitory signals per se as modifiers, and do not exclude any standard storage, memory or computer-readable media that are more than only propagating transitory signals per se.

Computer-readable storage media can be accessed by one or more local or remote computing devices, e.g., via access requests, queries, or other data retrieval protocols, for a variety of operations with respect to the information stored by the medium.

A system bus, as may be used herein, can be any of several types of bus structure that can further interconnect to a memory bus (with or without a memory controller), a peripheral bus, and a local bus using any of a variety of commercially available bus architectures. A database, as may be used herein, can include basic input/output system (BIOS) that can be stored in a non-volatile memory such as ROM, EPROM, or EEPROM, with BIOS containing the basic routines that help to transfer information between elements within a computer, such as during startup. RAM can also include a high-speed RAM such as static RAM for caching data.

As used herein, a computer can operate in a networked environment using logical connections via wired and/or wireless communications to one or more remote computers. The remote computer(s) can be a workstation, server, router, personal computer, portable computer, microprocessor-based entertainment appliance, peer device, or other common network node. Logical connections depicted herein may include wired/wireless connectivity to a local area network (LAN) and/or larger networks, e.g., a wide area network (WAN). Such LAN and WAN networking environments are commonplace in offices and companies, and facilitate enterprise-wide computer networks, such as intranets, any of which can connect to a global communications network, e.g., the Internet.

When used in a LAN networking environment, a computer can be connected to the LAN through a wired and/or wireless communication network interface or adapter. The adapter can facilitate wired or wireless communication to the LAN, which can also include a wireless access point (AP) disposed thereon for communicating with the adapter in a wireless mode.

When used in a WAN networking environment, a computer can include a modem or can be connected to a communications server on the WAN via other means for establishing communications over the WAN, such as by way of the Internet. The modem, which can be internal or external, and a wired or wireless device, can be connected to a system bus via an input device interface. In a networked environment, program modules depicted herein relative to a computer or portions thereof can be stored in a remote memory/storage device.

When used in either a LAN or WAN networking environment, a computer can access cloud storage systems or other network-based storage systems in addition to, or in place of, external storage devices. Generally, a connection between a computer and a cloud storage system can be established over a LAN or a WAN, e.g., via an adapter or a modem, respectively. Upon connecting a computer to an associated cloud storage system, an external storage interface can, with the aid of the adapter and/or modem, manage storage provided by the cloud storage system as it would other types of external storage. For instance, the external storage interface can be configured to provide access to cloud storage sources as if those sources were physically connected to the computer.

As employed in the subject specification, the term "processor" can refer to substantially any computing processing unit or device comprising, but not limited to comprising, single-core processors; single-core processors with software multithread execution capability; multi-core processors; multi-core processors with software multithread execution capability; multi-core processors with hardware multithread technology; vector processors; pipeline processors; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a state machine, discrete gate or transistor logic, discrete hardware components, or any combination thereof designed to perform the functions described herein. Processors can exploit nano-scale architectures such as, but not limited to, molecular and quantum-dot based transistors, switches and gates, in order to optimize space usage or enhance performance of user equipment. A processor may also be implemented as a combination of computing processing units. For example, a processor may be implemented as one or more processors together, tightly coupled, loosely coupled, or remotely located from each other. Multiple processing chips or multiple devices may share the performance of one or more functions described herein, and similarly, storage may be effected across a plurality of devices.

As an overview, various arrangements are described herein. For simplicity of explanation, the methods (or algorithms) are depicted and described as a series of steps or actions. It is to be understood and appreciated that the various arrangements are not limited by the actions illustrated and/or by the order of actions. For example, actions can occur in various orders and/or concurrently, and with other actions not presented or described herein. Furthermore, not all illustrated actions may be required to implement the methods. In addition, the methods could alternatively be represented as a series of interrelated states via a state diagram or events. Additionally, the methods described hereafter are capable of being stored on an article of manufacture (e.g., a machine-readable storage medium) to facilitate transporting and transferring such methodologies to computers.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

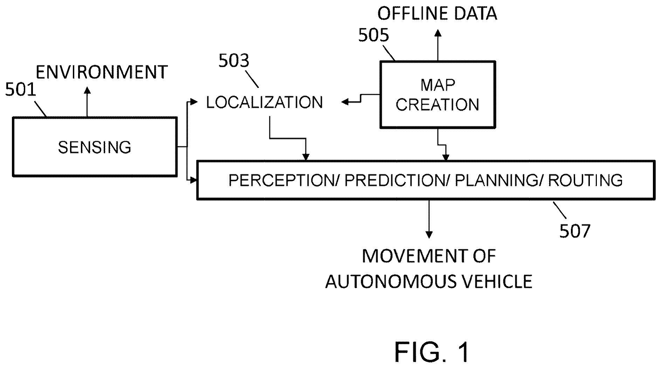

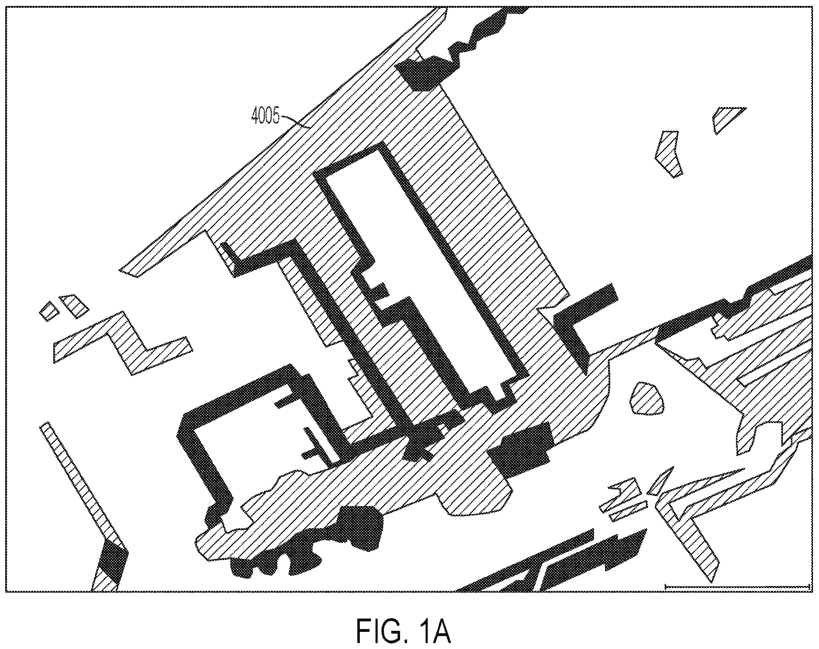

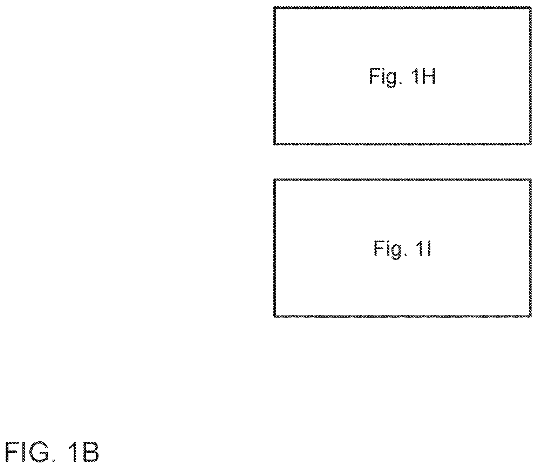

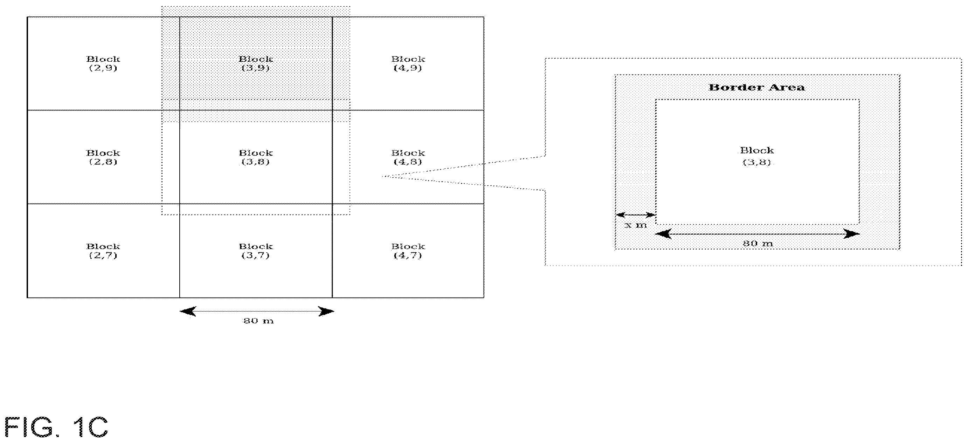

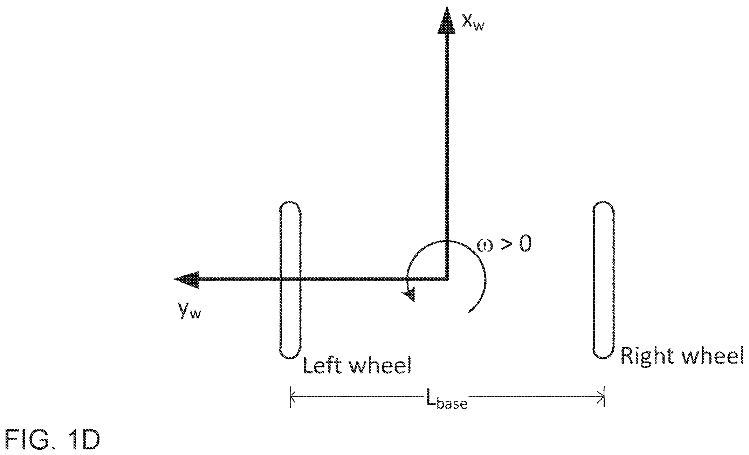

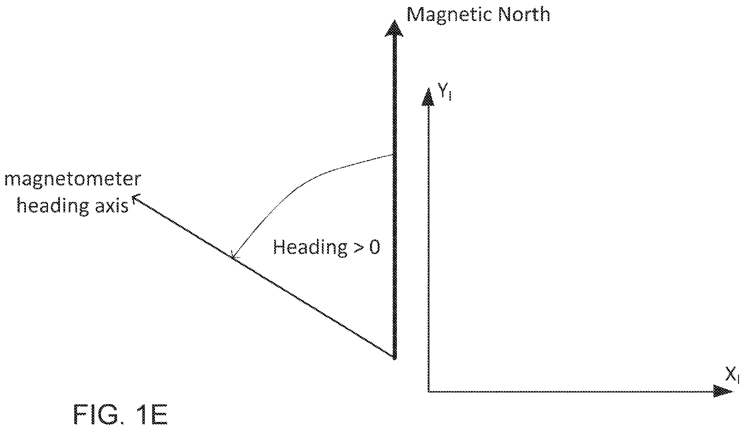

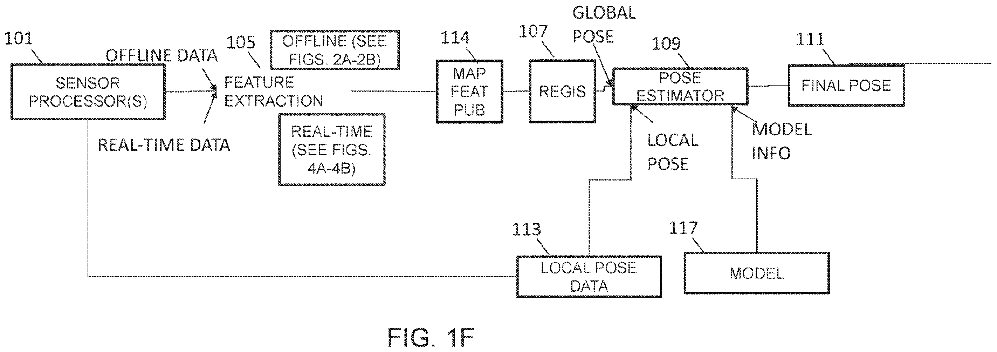

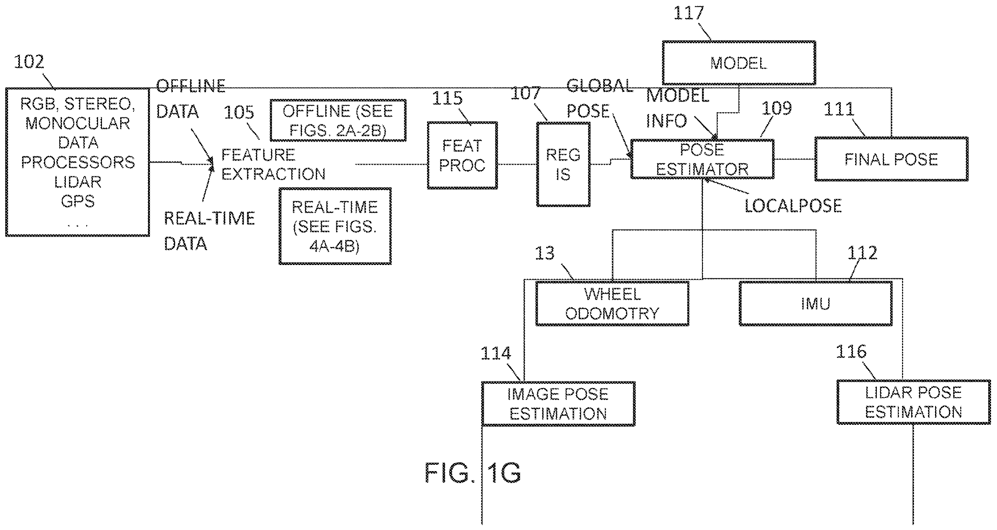

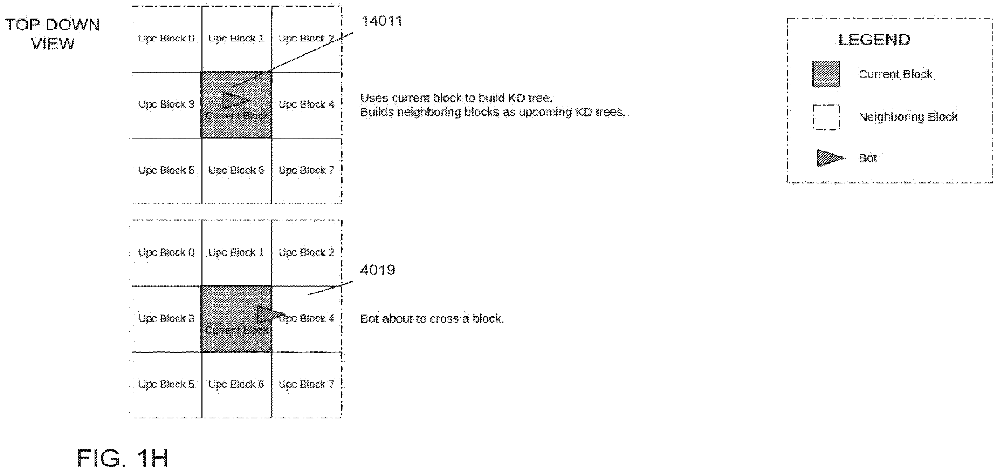

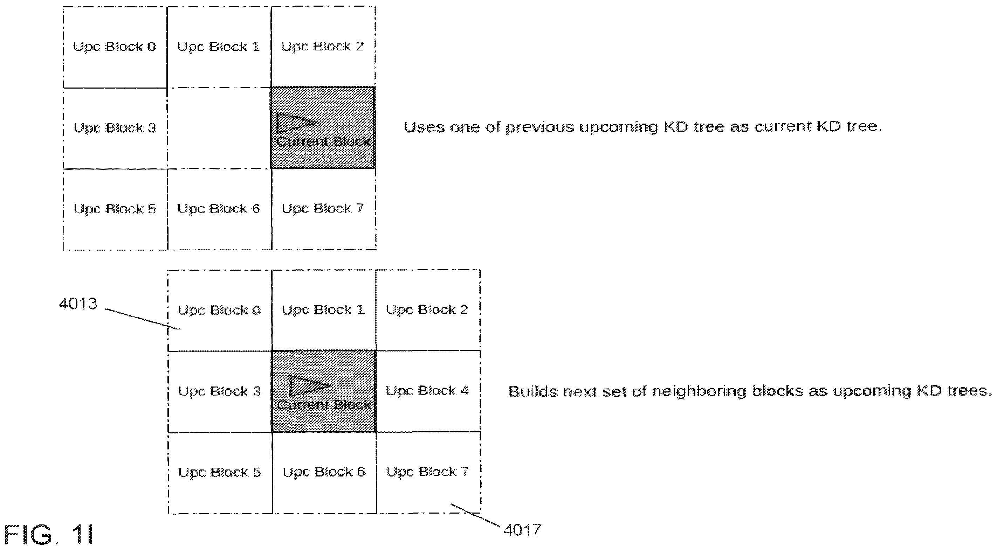

Referring now to FIG. 1, localization of an autonomous vehicle is accomplished in the larger context and goal of moving the autonomous vehicle safely in an environment that includes obstacles. The environment can include both vehicular traffic when the autonomous vehicle is navigating on vehicular roadways, and pedestrian traffic when the autonomous vehicle is navigating on sidewalks and other pedestrian walkways such as bike/walker lanes. As the autonomous vehicle navigates, it receives sensor data 501 from sensors that are both mounted on the autonomous vehicle and mounted elsewhere such as, for example, but not limited to, a roadside, a beacon, a traffic signal, other vehicles, satellites, and other airborne sensors. These data are provided both to localization logic 503 and other autonomous logic 507. Additionally, maps of the area of the autonomous vehicle are created 505 for the autonomous vehicle to localize itself to. The result of executing the logic is movement of the autonomous vehicle towards a destination, avoiding the obstacles and navigating in pedestrian and vehicular traffic.

The system and method of the present teachings include processors and processes for real-time localizing of an autonomous vehicle. The system of the present teachings for providing continuous localization for an autonomous vehicle includes at least one processor executing in at least one autonomous vehicle. The method of the present teachings includes a lane-level localization-type process in which (1) the at least one processor receives, processes, and provides offline (map) data, and receives and processes real-time (sensor) data. The map and sensor data, although possibly collected by the same vehicle, are collected during different navigation time periods. Sensors such as, but not limited to, LIDAR, GPS, and optical devices provide point cloud data, geographic data, and stereo and monocular data. Other types of sensors and data are contemplated by the present teachings. During the localization process, previously-collected map data are accessed as the real-time data are collected. (2) Data that are relevant to the current GPS-determined position of the autonomous vehicle are isolated, and (3) a matching is computed between the map and the real-time sensor data to determine a pose, referred to herein as a global pose, along with a measure of uncertainty of the pose within the map frame. As the autonomous vehicle navigates, (4) a local pose is continuously computed that is a comparison between the current pose and a previous pose. Further, (5) a model of the movement of the autonomous vehicle is executed to provide a prediction of future characteristics of the autonomous vehicle. The global pose, local pose, and model characteristics are used to (6) compute a real-time estimate of the pose of the autonomous vehicle. The real-time estimate of the pose is determined by a method that propagates the varying measurements taken by an autonomous vehicle over time to predict a subsequent state of the autonomous vehicle and the uncertainty of that prediction. When a new measurement is received, the method updates the estimate and the uncertainty. (7) The real-time estimate of the pose is corrected based on available features in the incoming data.

Referring now to Fig. 1A, in an aspect, with respect to (1), feature-based maps include ground maps and planar maps. A feature map is prepared from, for example, LIDAR data. FIG. 1A illustrates raw point cloud data points 4005 and the sorting of point cloud points into ground points 4001 and planar points 4003. Non-feature-based maps include raw data that have been uniformly downsampled to a pre-selected density. Criteria for down-sampling are user-defined, default, and/or dynamically-determined. When the raw data, ground, and planar point cloud data are collected, they are segregated into blocks of a pre-selected size, and then provided to the autonomous vehicle where the data are made available to the localization process of the present teachings.

Maps include ground points 4001 (non-planar points). The system and method of the present teachings sort ground points 4001 from planar points 4003 in a point cloud. Ground points 4001 are determined by locating, from the raw map, the points in ground planes. In an aspect, the requirements associated with identifying ground planes are user-defined. For example, extracted planes with normals are close to vertical within a pre-defined threshold are labels as ground planes. In an aspect, the requirements are dynamically determined based on incoming sensor data and characteristics of the environment surrounding the autonomous vehicle. In an aspect, the system includes a dataset of possible ground plane characteristics, possibly dependent on, for example, but not limited to, environment and/or geographic location. Ground planes are fitted to each other, and when all the ground points in the ground planes are identified, they are removed from the raw data so that only planar points 4003 are considered in the localization process. In an aspect, non-planar features are determined from downsampled point cloud data. In an aspect, downsampling is done by pre-selecting a point density, cutting the point cloud data area into pre-selected sizes, pre-selecting how many points the pre-selected sized area will contain, and downsampling to that number of points.

Maps include planar points 4003. Planar points 4003 are determined by locating the points in non-ground planes. Criteria for being selected as a planar point are user-defined, default, and/or dynamically-determined. In an aspect, planar features, such as walls and other non-surface objects, are recognized according to pre-determined criteria. In offline data, recognition of planar points is done by selecting a random point from the LIDAR point cloud data, locating its nearest neighbors, and, if the points span a plane, determining which points, from the point cloud data, lie on the plane. The system performs this process iteratively until the process has reached a threshold based on pre-selected termination criteria. The pre-selected criteria include, but are not limited to including, a pre-selected number of planes has been discovered, there aren't enough points remaining to perform the process, or a maximum number of iterations has been reached. At this point, the planes (representing planar features) are combined into an offline feature map. For real-time data, points from multiple data scans from sensors associated with the autonomous vehicle are filtered and then used to form planes that are grown to outliers. Filtering includes omitting points that are parts of discontinuities in the planes. Grown planes that are non-surface are chosen to participate further in matching with planes from the offline map data.

Referring now to FIGs. 1B, 1C, 1H and 1I, with respect to (2)-(7), the system and method of the present teachings perform a registration between the offline and real-time data. Further, map data surrounding the autonomous vehicle are divided into blocks of a pre-selected size. Instead of all data being processed at once, only the data closest to the autonomous vehicle and the data in the area towards which the autonomous vehicle is navigating (which could be one in the same) are processed.

Referring now to Figs. 1B, 1C, 1H and 1I, in an aspect, with respect to (2), data that are relevant to the location of the autonomous vehicle are provided for computing localization. In an aspect, the pre-selected area includes a geometric shape with the autonomous vehicle in center 14011, for example, a circle, rectangle, square, or oval. In an aspect, the data in the current pre-selected area are divided into blocks. In an aspect, nine blocks of a pre-selected amount of data surrounding the autonomous vehicle are provided to the processors in the autonomous vehicle including the block of data where the autonomous vehicle is located and eight blocks of data corresponding to possible directions in which the autonomous vehicle might move. Block 4011 where the autonomous vehicle is located is used to build a data structure in multi-dimensional space that enables efficient storage of the spatial data, range search, partitioning data points based on specific conditions, and other features. K-dimensional (k-d) trees, R-trees, quad trees, and octrees are examples of data structures that can be used to represent the sensor data surrounding the autonomous vehicle. The data structure is also built using data in neighboring blocks, for example, blocks 4013, 4015, and 4017 where the autonomous vehicle could move next. When the autonomous vehicle finds itself at a boundary between adjacent blocks, the new data structure is accessed, and a new set of data structures are created from the neighboring blocks of data.

Continuing with respect to (3)-(7), referring now to FIG. 1C, as the autonomous vehicle navigates near and upon the boundaries 4019 between blocks, loading new data from an adjacent block could cause thrashing between data blocks. Further, when the autonomous vehicle is located near the corners of the block in which it is navigating, the autonomous vehicle could navigate into any of the three blocks forming the corner neighbors. To address this possibility, border area 4021 between blocks of a pre-selected thickness is designated. The autonomous vehicle can travel in border area 4021 without triggering the data transfer of the adjacent blocks of data. When the autonomous vehicle exits border area 4021, then the data transfer occurs. In an aspect, the width of border area 4021 is user-defined. In an aspect, the width of border area 4021 is dynamically-determined, possibly based upon the speed of the autonomous vehicle, the number and type of the obstacles surrounding the autonomous vehicle, and/or other aspects of the environment of the autonomous vehicle. In an aspect, the width of border are 4021 is chosen based on a pre-selected recipe or algorithm.

With respect to (4), and referring to FIGs. 1D and 1E, the local pose is computed, according to the present teachings, based on data collected by the autonomous vehicle in real time. Such data can include, but are not limited to including, wheel odometry data, inertial measure unit (IMU) data, image pose estimation data, and LIDAR pose estimation data. In an aspect, as shown in FIG. 1D, wheel odometry is provided by wheel encoders. Wheel encoders measure the angular travel of each wheel. In an aspect, the encoder measurement assumes that the angular travel occurs at a constant rate during a sample period, thus the encoder measurement provides an angular velocity. Scaling the angular velocity by the radius of the wheel transforms the wheel encoder into a wheel linear velocity sensor.

$$v_{\text{left},k} = r_{\text{wheel}} \cdot \frac{m_{\text{leftWheel},k} - m_{\text{leftWheel},k-1}}{dt}, v_{\text{right},k} = r_{\text{wheel}} \cdot \frac{m_{\text{rightWheel},k} - m_{\text{rightWheel},k-1}}{dt}.$$

These measurements translate into measurements of the forward linear velocity and the yaw angular velocity.

$$\vec{x}_{\text{vel},k} = \frac{1}{2}\left(v_{\text{right},k} + v_{\text{left},k}\right) \cdot \vec{x}_{\text{rot},k} \odot \begin{Bmatrix} 1 \\ 0 \\ 0 \end{Bmatrix} \odot \vec{x}_{\text{rot},k}^{\star}$$

$$\left[\vec{\omega}_{\text{imu},k} - \vec{x}_{\text{gyroBias},k-1}\right] = \frac{1}{L_{\text{base}}}\left(v_{\text{right},k} - v_{\text{left},k}\right) \cdot \left[\acute{R}_{\text{imuToWheel},k}^{T} \begin{Bmatrix} 0 \\ 0 \\ 1 \end{Bmatrix}\right]$$

The measurements are predicted:

$$v_{\text{right},k} + v_{\text{left},k} = 2(1 \quad 0 \quad 0) \cdot \left\{ \vec{x}^{\star}_{\text{rot},k} \odot \vec{x}_{\text{vel},k} \odot \vec{x}_{\text{rot},k} \right\}$$

$$v_{\text{right},k} - v_{\text{left},k} = L_{\text{base}}(0 \quad 0 \quad 1) \cdot \left[ \acute{R}_{\text{imuToWheel},k} \cdot \left\{ \vec{\omega}_{\text{imu},k} - \vec{x}_{\text{gyroBias},k-1} \right\} \right]$$

Adding and subtracting, gives

$$2v_{\text{right},k} = \left[ 2(1 \quad 0 \quad 0) \cdot \left\{ \vec{x}^{\star}_{\text{rot},k} \odot \vec{x}_{\text{vel},k} \odot \vec{x}_{\text{rot},k} \right\} \right]$$
$$+ \left[ L_{\text{base}}(0 \quad 0 \quad 1) \cdot \left[ \acute{R}_{\text{imuToWheel},k} \cdot \left\{ \vec{\omega}_{\text{imu},k} - \vec{x}_{\text{gyroBias},k-1} \right\} \right] \right]$$

$$2v_{\text{left},k} = \left[ 2(1 \quad 0 \quad 0) \cdot \left\{ \vec{x}^{\star}_{\text{rot},k} \odot \vec{x}_{\text{vel},k} \odot \vec{x}_{\text{rot},k} \right\} \right]$$
$$- \left[ L_{\text{base}}(0 \quad 0 \quad 1) \cdot \left[ \acute{R}_{\text{imuToWheel},k} \cdot \left\{ \vec{\omega}_{\text{imu},k} - \vec{x}_{\text{gyroBias},k-1} \right\} \right] \right]$$

Dividing by two and substituting in the definitions of $v_{\text{left}}$ and $v_{\text{right}}$

$$\frac{r_{\text{wheel}}}{dt} \left( m_{\text{rightWheel},k} - m_{\text{rightWheel},k-1} \right)$$
$$= \left[ (1 \quad 0 \quad 0) \cdot \left\{ \vec{x}^{\star}_{\text{rot},k} \odot \vec{x}_{\text{vel},k} \odot \vec{x}_{\text{rot},k} \right\} \right]$$
$$+ \frac{1}{2} \left[ L_{\text{base}}(0 \quad 0 \quad 1) \cdot \left[ \acute{R}_{\text{imuToWheel},k} \cdot \left\{ \vec{\omega}_{\text{imu},k} - \vec{x}_{\text{gyroBias},k-1} \right\} \right] \right]$$

$$\frac{r_{\text{wheel}}}{dt} \left( m_{\text{leftWheel},k} - m_{\text{leftWheel},k-1} \right)$$
$$= \left[ (1 \quad 0 \quad 0) \cdot \left\{ \vec{x}^{\star}_{\text{rot},k} \odot \vec{x}_{\text{vel},k} \odot \vec{x}_{\text{rot},k} \right\} \right]$$
$$- \frac{1}{2} \left[ L_{\text{base}}(0 \quad 0 \quad 1) \cdot \left[ \acute{R}_{\text{imuToWheel},k} \cdot \left\{ \vec{\omega}_{\text{imu},k} - \vec{x}_{\text{gyroBias},k-1} \right\} \right] \right]$$

$$\acute{m}_{\text{rightWheel},k} = m_{\text{rightWheel},k} + \left\{ \frac{\vec{x}_{\text{rightGain},k-1} \cdot dt}{r_{\text{wheel}}} \left[ (1 \quad 0 \quad 0) \cdot \left\{ \vec{x}^{\star}_{\text{rot},k} \odot \vec{x}_{\text{vel},k} \odot \vec{x}_{\text{rot},k} \right\} \right] \right\}$$
$$+ \left\{ \frac{\vec{x}_{\text{rightGain},k-1} \cdot L_{\text{base}} dt}{2 r_{\text{wheel}}} \left[ L_{\text{base}}(0 \quad 0 \quad 1) \right. \right.$$
$$\left. \left. \cdot \left[ \acute{R}_{\text{imuToWheel},k} \cdot \left\{ \vec{\omega}_{\text{imu},k} - \vec{x}_{\text{gyroBias},k-1} \right\} \right] \right] \right\} + n_{\text{right},k}$$

$$\hat{m}_{\text{leftWheel},k} = m_{\text{leftWheel},k} + \left\{ \frac{\vec{x}_{\text{leftGain},k-1} \cdot dt}{r_{\text{wheel}}} \left[ (1 \quad 0 \quad 0) \cdot \{ \vec{x}^{\star}_{\text{rot},k} \odot \vec{x}_{\text{vel},k} \odot \vec{x}_{\text{rot},k} \} \right] \right\}$$

$$- \left\{ \frac{\vec{x}_{\text{leftGain},k-1} L_{\text{base}} dt}{2r_{\text{wheel}}} \left[ L_{\text{base}}(0 \quad 0 \quad 1) \right. \right.$$

$$\left. \left. \cdot \left[ \acute{R}_{\text{imuToWheel},k} \cdot \{ \vec{\omega}_{\text{imu},k} - \vec{x}_{\text{gyroBias},k-1} \} \right] \right] \right\} + n_{\text{left},k}$$

In an aspect, as shown in FIG. 1E, the IMU includes a magnetometer that returns a local heading relative to magnetic north. The measurement of local heading with respect to the inertial frame is shown in FIG. 1E. The equation predicting the heading measurement is

$$\hat{m}_{\text{hdg},k} = \text{atan2} \left( -\text{projection}_x, \text{projection}_y \right) + n_{\text{hdg},k}$$

$$\overrightarrow{\text{projection}} = \vec{x}_{\text{rot},k} \odot \left\{ \acute{R}_{\text{magToWheel}} \cdot \overrightarrow{\text{magnetometerHeading}} \right\} \odot \vec{x}^{\star}_{\text{rot},k}$$

The matrix $\acute{R}_{\text{magToWheel}}$ transforms the reference frame associated with the magnetometer to the wheelbase reference frame. In an aspect, image pose estimation is based on previous and current images gathered by sensors mounted on the autonomous vehicle. In an aspect, the sensors are located elsewhere, for example, but not limited to, on beacons, on other autonomous vehicles, on manned vehicles, on traffic signals, and on handheld devices. In an aspect, LIDAR pose estimation results from the comparison between current and previous poses provided by LIDAR measurements. In an aspect, two vectors are compared. [[if using the following equations, need to define the variables]]

$$\hat{\vec{m}}_{\text{LIDAR,psn},k} = \vec{x}_{\text{psn},k} - \vec{x}_{\text{psn,hold}} + \vec{n}_{\text{LIDAR,psn},k}$$

$$\hat{\vec{m}}_{\text{LIDAR,rot},k} = \vec{x}^{\star}_{\text{rot,hold}} \odot \frac{\vec{x}_{\text{rot},k} + \vec{n}_{\text{LIDAR,rot},k}}{\left\| \vec{x}_{\text{rot},k} + \vec{n}_{\text{LIDAR,rot},k} \right\|}$$

where $\vec{x}_{\text{hold}}$ is a copy of the state vector from the previous time LIDAR data were available. In an aspect, GPS sensors provide a direct measure of $\vec{x}_{\text{psn},k}$ and $\vec{x}_{\text{vel},k}$.

$$\hat{\vec{m}}_{\text{GPS,psn},k} = \vec{x}_{\text{psn},k} + \vec{n}_{\text{GPS,psn},k}$$

$$\hat{\vec{m}}_{\text{GPS,vel},k} = \vec{x}_{\text{vel},k} + \vec{n}_{\text{GPS,vel},k}$$

Preferably, the invention makes use of other sensors, not limited to an IMU and a wheel encoder. An IMU provides information about orientation and angular velocities of the autonomous vehicle. A wheel encoder provides information about linear and angular velocity of the autonomous vehicle. These measurements are used by UKF for estimating an internal state.

With respect to (5), in an aspect, a way to predict the motion of the autonomous vehicle is needed to estimate a pose from the data described thus far. One way to predict motion is through assuming constant behavior. Another is to create a general movement model for vehicles, and yet another is to create a vehicle-specific movement model. The model can be dynamically updated as the autonomous vehicle encounters various situations, such as different kinds of surfaces and terrain, or different characteristics of the vehicle itself, for example, the weight it carries. Yet another way to predict movement is to use the localization result itself to determine revised motion parameters that reflect the motions of the autonomous vehicle. One such technique is described in Milstein et al., Localization with Dynamic Motion Models, International Conference on Informatics in Control, Automation, and Robotics (ICINCO), 2006.

With respect to (6), in an aspect, the global pose, the local pose, and model output data, are supplied to a method for estimating the final pose. Exemplary methods that provide such estimates fall in the category of Bayesian state estimators. Such estimators include, but are not limited to including, Kalman filters, extended Kalman filters, unscented Kalman filters (UKF), and particle filters. Kalman filters, extended Kalman filters, and particle filters are described in Montella, C., The Kalman Filter and Related Algorithms: A Literature Review, https://www.researchgate.net/publication/236897001, May, 2011. A description of a UKF implementation can be found in Wan et al., The Unscented Kalman Filter, Kalman Filtering and Neural Networks, Chapter 7, Haykin ed., John Wiley & Sons, Inc., October 2001. The UKF allows addition/removal of sensing elements and accommodates varying sampling rates.

Referring now to FIGs. 1F and 1G, shown are the components of exemplary configurations of the system of the present teachings. In an aspect, all components are housed within an autonomous vehicle. In an aspect, some processing is performed outside of the autonomous vehicle, and the result is provided to the autonomous vehicle through standard communications hardware and protocols. The components collectively determine the location of the autonomous vehicle within a pre-selected area. In an aspect, data in the pre-selected area are collected offline, and real-time data are collected as the autonomous vehicle navigates the pre-selected area. As the vehicle navigates, features are isolated and registered, and these data as well as other data are used to compute and correct the pose.

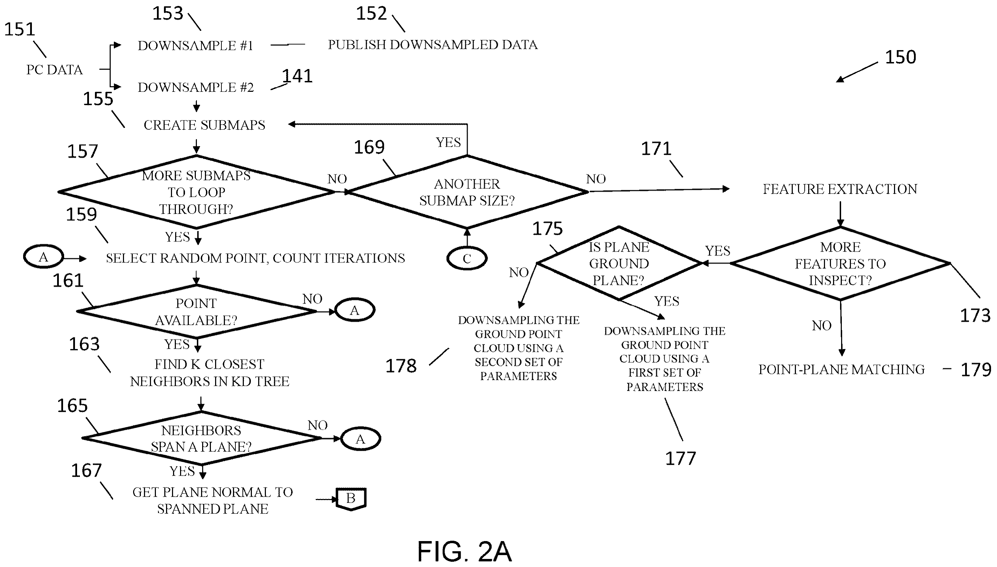

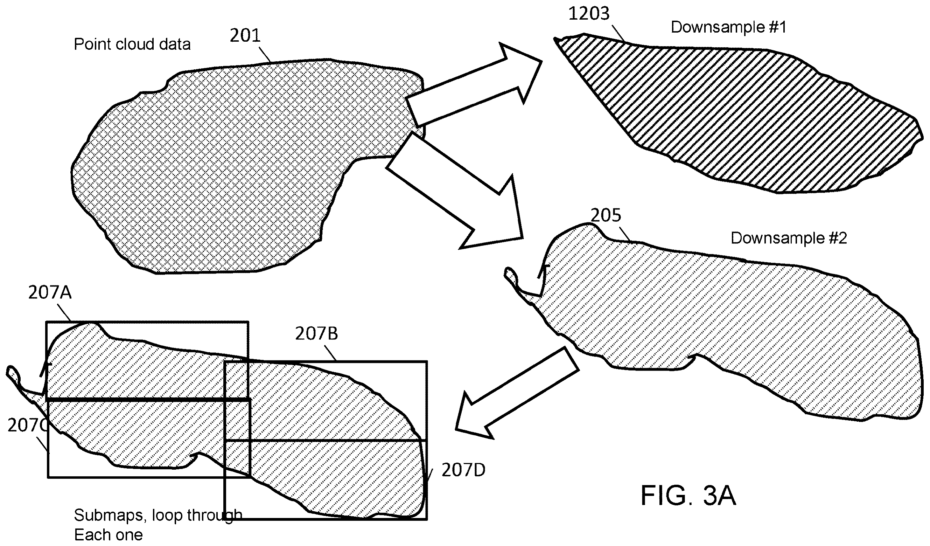

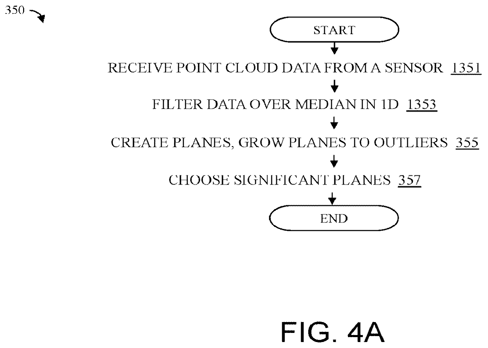

Continuing to refer to FIGs. 1F and 1G, sensor(s) provide data to sensor processor(s) 101. In an aspect, mapping data (offline data) from data collections of a target area are provided. In an aspect, sensors collect at least LIDAR, image, and GPS data. The GPS data are used, among other ways, to locate the autonomous vehicle so that a subset of relevant off-line data can be provided to the autonomous vehicle. Real-time LIDAR and image data are used, among other ways, in the computation of the poses. The system of the present teachings processes offline data in the manner described in FIGs. 2A-2B and 3A-3C, and real-time data in the manner described in FIGs. 4A-4I. These data are searched to perform feature extraction 105. Features of the real-time and offline data can present challenges when being processed together. For example, real-time data can be collected at a different frame rate from offline data. Both datasets could span a much larger area than the autonomous vehicle is currently navigating. For these reasons and possibly others, the features from the two datasets are pre-processed 114 before being transformed into a global pose. Pre-processing can include, for example, but not limited to, organizing the data according to a conventional organizational scheme such as a k-d tree for efficient matching. Outliers are rejected, a pose is estimated and corrected, and the process is repeated until convergence of real time point cloud onto the map point cloud is reached. In an aspect, the transform is done using registration method 107, for example, but not limited to, the Iterative Closest Point (ICP) algorithm which has several variants. Other techniques are contemplated by the present teachings such as, for example, but not limited to, the Levenberg-Marquardt iterative method, a least squares rigid transformation, and a robust rigid transformation. One description of an ICP implementation can be found in Low, Linear Least-Squares Optimization for Point-to-Plane ICP Surface Registration, Technical Report TR04-004, Department of Computer Science, University of North Carolina at Chapel Hill, February 2004 (Low). There are a multitude of variants of the ICP algorithm including variants that select a set of points in both datasets, match certain points in one dataset to the other, weight corresponding pairs, reject certain pairs, assign an error metric, and minimize the error metric. The ICP variant chosen for solving the localization problem of the present teachings is based, for example, on the types and characteristics of sensors used, the desired accuracy of the result, and the desired computation speed.

Continuing to refer to FIGs. 1F and 1G, the global pose based on offline and real-time data, along with a local pose, and model data, are provided to pose estimator 109 which produces, after pose correction, final pose 111. In an aspect, local pose data 113 can include, but is not limited to including, wheel odometry data 13 (FIG. 1G) and inertial measurement unit (IMU) data 112 (FIG. 1G), as well as image pose estimation data 134 (FIG. 1G) and LIDAR pose estimation data 136 (FIG. 1G). In an aspect, behavior and characteristic data of the autonomous vehicle can be provided to improve the result even further. In an aspect, data (model information) from model 117 can be provided as the autonomous vehicle navigates. In an aspect, model 117 computes the characteristic data and represents the behavior of the autonomous vehicle based on model algorithms.

Referring now to FIG. 2A, a flowchart representing an exemplary process for offline data digestion is shown. Method 150 includes, but is not limited to including, receiving 151 data, such as, but not limited to, point cloud data as the autonomous vehicle navigates. Three dimensional point cloud data can be obtained from stereo cameras mounted on the autonomous vehicle or elsewhere, LIDAR sensors, roadside surround view cameras, mobile laser scanning, structure from motion, and/or airborne laser scanning, for example. Method 150 includes uniform downsampling 153 the incoming data to produce final raw point cloud data that are published for access by processors on the autonomous vehicle. Method 150 includes downsampling 141 the incoming data and creating 155 submaps of the remaining data points. Creating submaps involves segregating the map of data points into subparts, and then analyzing each subpart separately in a loop that includes steps 157-199. If 157 there are no more submaps to loop through, and if there is no other submap size, method 150 includes ending 171 feature extraction and beginning feature processing. If at step 173 there are no more features to inspect, method 150 includes performing step 179 point-plane matching. If at step 173 there are more features to inspect, and if at step 175 the plane is a ground plane, method 150 includes a step 177 of downsampling the ground point cloud using a first set of parameters to create a final ground point cloud. If at step 175 the plane is not a ground plane, method 150 includes a step 178 of downsampling the non-ground point cloud using a second set of parameters to create a final planar point cloud.

Maps are broken into various submap sizes to take into account cross-submap planes. If at step 157 there are more submaps to loop through, method 150 includes a step 159 of selecting a random point within the submap. If at step 161 there is a point available, method 150 includes a step 163 of finding the point's k closest neighbors in a k-d tree. If at step 165 the neighbors span a plane, method 150 includes a step 167 of locating a plane that is normal to the spanned plane.

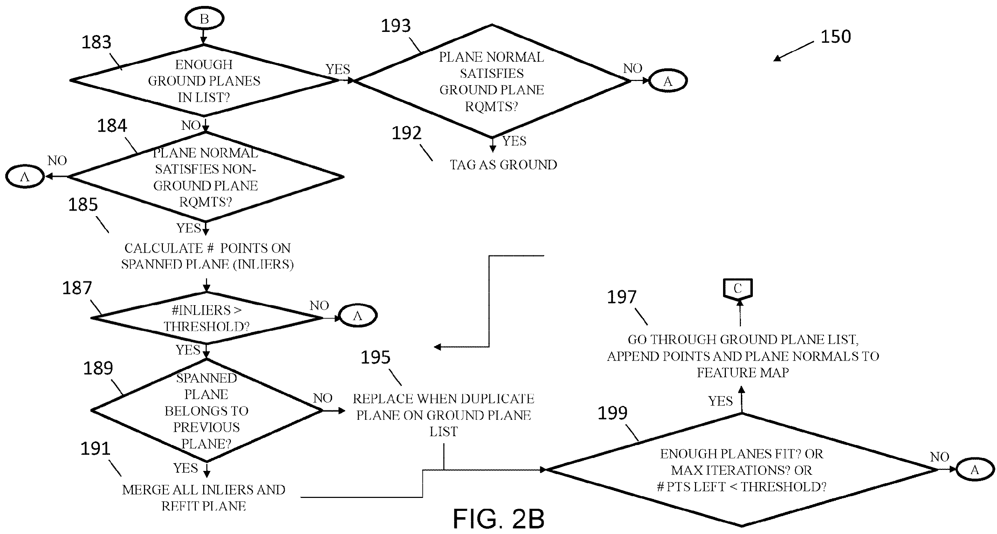

Referring now to FIG. 2B, if 183 a pre-selected threshold of the number of ground planes has been reached, and if 193 the plane normal satisfies non-ground plane requirements, method 150 includes tagging 192 the plane as a non-ground plane. If 183 the pre-selected threshold has not been reached, and if 184 the plane normal satisfies ground plane requirements, method 150 includes calculating 185 the number of points on the spanned plane, referred to herein as inliers. If 187 the number of inliers is greater than a pre-selected threshold, and if 189 the spanned plane belongs to a previous plane, meaning that, if the plane is tagged as a ground plane, test all the ground planes in the ground plane list for angle and distance thresholds to see if the planes are the same, method 150 includes merging 191 all the inliers and refitting the plane, meaning making a larger plane and computing a different normal. If 189 the spanned plane does not belong to a previous plane, method 150 includes replacing the plane in the ground plane list when duplicate. If 199 the number of fit planes has reached a pre-selected threshold, or if the loop has met a pre-selected maximum number of iterations, or if the number of points left is less than a pre-selected threshold, method 150 includes appending 197 points and plane normals from the ground plane list to a feature map and returned to check for another submap.

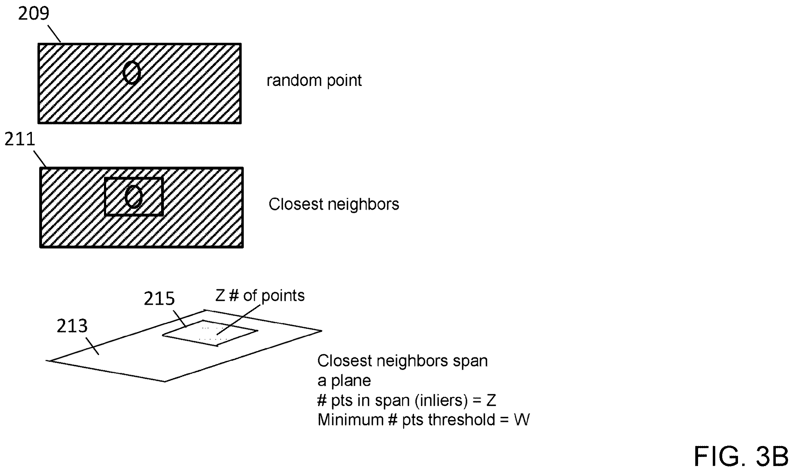

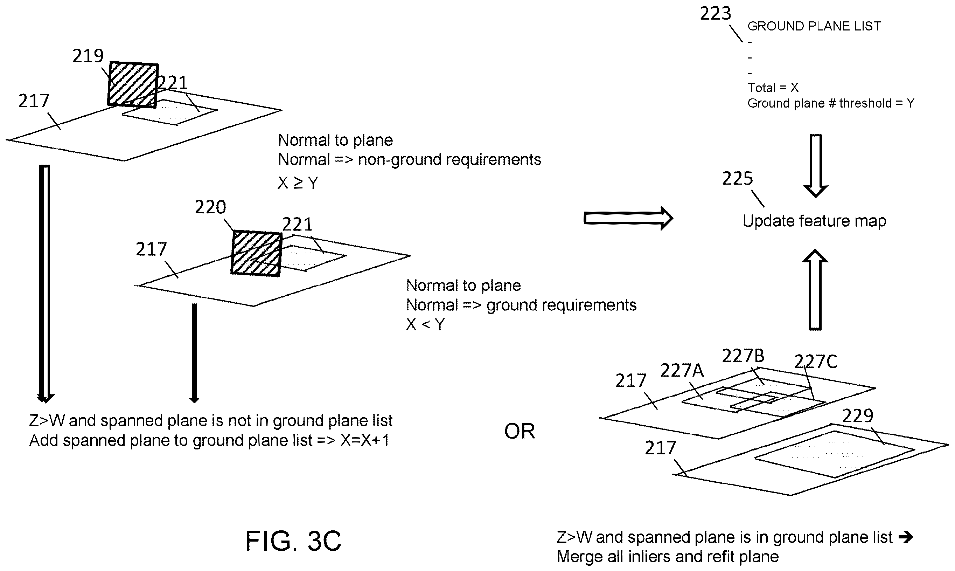

Referring now to FIGs. 3A-3C, a pictorial representation of method 150 (FIGs. 2A-2B) is shown. Specifically, point cloud data 201 are downsampled in two ways to provide downsample #1 data 1203 (FIG. 3A) and downsample #2 data 205 (FIG. 3A). Downsample #1 data 1203 (FIG. 3A) are used later in the matching process. Downsample #2 data 205 (FIG. 3A) are broken into subparts, for example, submaps 207A-207D (FIG. 3A). Random point 209 (FIG. 3B) is chosen from a submap, and its k closest neighbors 211 (FIG. 3B) are determined. If the k closest neighbors and the random point span plane 215 (FIG. 3B) within submap 213 (FIG. 3B), the number of points, z, in the spanned plane are counted and compared to a pre-selected threshold minimum number of points w. Normal plane 219 (FIG. 3C) to spanned plane 221 (FIG. 3C) is determined. If normal plane 219 (FIG. 3C) meets non-ground plane requirements, and the total number of ground planes x is greater than a ground plane number threshold y, feature map 225 (FIG. 3C) is updated. If normal plane 220 (FIG. 3C) meets ground plane requirements, and the total number of ground planes x is less than the ground plane number threshold y, feature map 225 (FIG. 3C) is updated. If the number of points z is greater than the pre-selected threshold minimum number of points w and spanned plane 221 (FIG. 3C) is not in the ground plane list, the spanned plane is added to the ground plane list and the number of ground planes x is incremented, x+1. If the number of points z is greater than the pre-selected threshold minimum number of points w and spanned plane 221 (FIG. 3C) is in the ground plane list, all the inliers are merged, the plane is refitted, and the feature map is updated. The offline map data are ready to enter the feature mapping process.

Referring now to FIG. 4A, real-time data are gathered to complete the localization process. Method 350 for locating significant planes in real-time data can include, but is not limited to including, at a very high level, receiving 1351 point cloud data from a sensor, filtering 1353 data over the data median in one dimension, creating 355 planes and growing planes to outliers, choosing 357 significant planes, and providing the planes to feature extraction 105 (FIG. 1F).

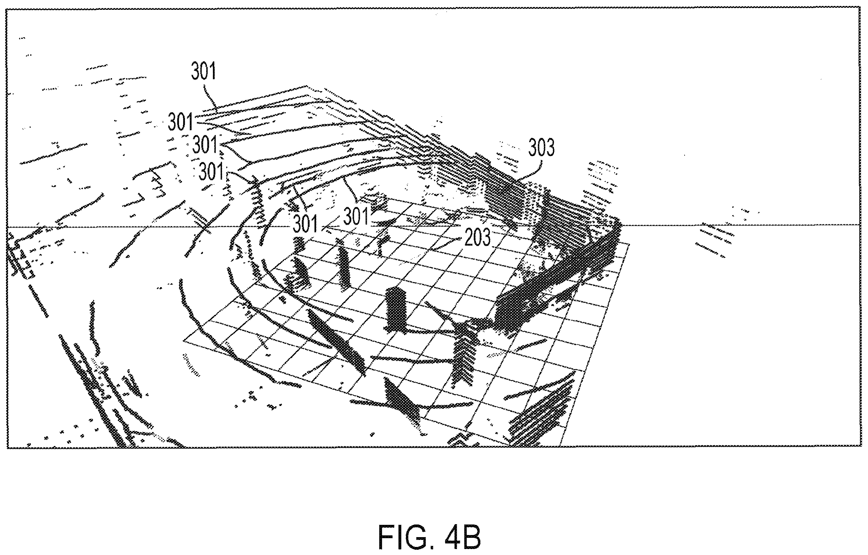

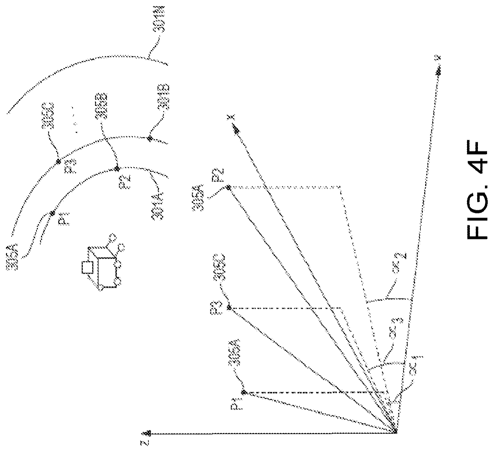

Referring now to FIG. 4B, in an aspect, when LIDAR point cloud data are collected (versus another type of sensor data) point cloud data can be received as 1D string 303 of points along each LIDAR ring 301 surrounding autonomous vehicle 203. In some configurations, three 1D arrays can be used to store x, y, and z points. All points along a LIDAR ring can be stored in order of azimuth angle (see FIG. 4F), and the LIDAR rings can be stored consecutively in a row major fashion. Each of the rings can be divided into segments of a pre-selected size, for example, but not limited to, 64 points.

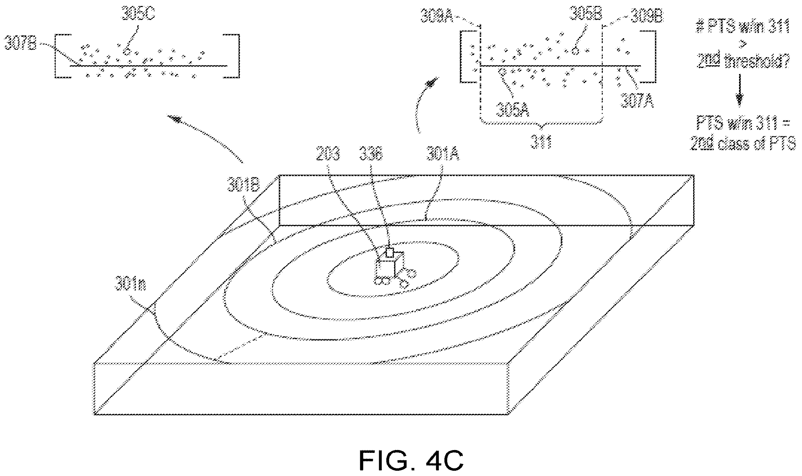

Referring now to FIG. 4C, 1D string 303 (FIG. 4B) on rings 301A/B/N can be filtered according to a process that can include, but is not limited to including, filtering 1D string 303 around median 307A/B of the points of 1D string 303 in each LIDAR 336 data ring. Filtering can include locating points with measured values close to median 307A/B and eliminating the rest of the points for this part of the analysis. In some configurations, close to median 307A/B is defined as less than 0.1m from median 307A/B. The points that have passed the median filter can be termed a first class of points. Along median 307A/B can be found discontinuities 309A/B in the point data. Discontinuities 309A/B can be identified in any suitable way, for example, but not limited to calculating the Cartesian distance between points P1 and P2, comparing the distance to a first pre-selected threshold, and identifying discontinuities 309A/309B or edges of the data as a second class of points when the distance between points P1 and P2 is greater than the first pre-selected threshold. In some configurations, discontinuities 309A/B arise when

$$abs(D2 - D1) > 0.08 * NP * A$$

where

        P1, P2 = consecutive points

D1 = distance between P1 and sensor

D2 = distance between P2 and sensor

NP = # of points since last good point

$$A = (D1+D2)/2$$

P1 = last good point

P2 = point being tested

The points between discontinuities 309A/309B located in space 311 can be counted and labeled as a third class of points if the number of points exceeds a second pre-selected threshold. In some configurations, the second pre-selected threshold can include eight points. Points lying between pairs of discontinuities that do not exceed the second pre-selected threshold can be discarded.

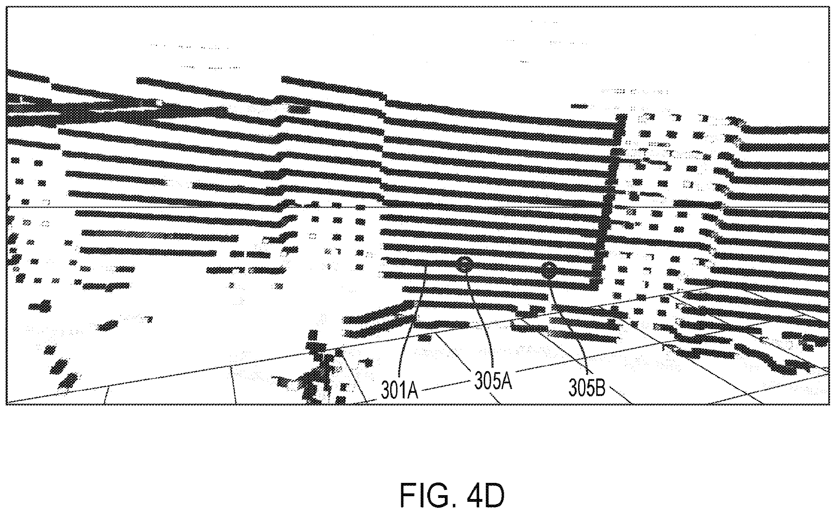

Referring now to FIG. 4D, significant planes are expected to fit the terrain around the autonomous vehicle. They have relatively low residual error, are large enough, and are generally representative of the ground points around the autonomous vehicle. In some configurations, a residual error threshold can include 0.1. To determine significant planes, points can be chosen, such as first point 305A and second point 305B, from points on the same LIDAR ring 301A. In some configurations, first point/second point 305A/B can be selected at random from the third class of points lying between adjacent discontinuities. Other criteria can be used to increase the probability that the points belong to a significant plane.

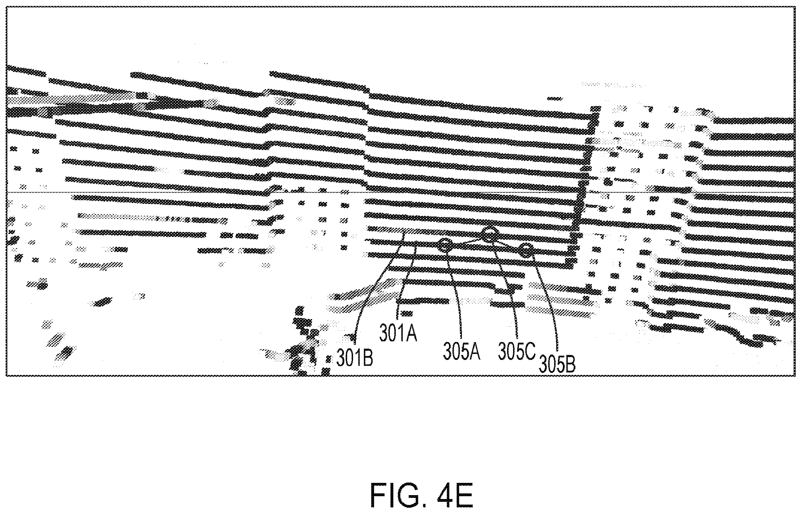

Referring now to FIGs. 4E and 4F, third point 305C can be selected from adjacent ring 301B. Third point 305C can have an azimuth angle $\alpha_3$ (FIG. 4F) that lies between the azimuth angles $\alpha_1$ (FIG. 4F) and $\alpha_2$ (FIG. 4F) of first point 305A and second point 305B. First/second/third points 305A/B/C form a plane having a defining equation that can be evaluated for its relationship to a gravity vector. In some configurations, evaluating the plane can include checking the orientation of the plane by choosing planes having a normal vector no more than 60° with respect to the gravity vector provided by, for example, but not limited to, an inertial measurement sensor located on the autonomous vehicle. As the planes are grown and points are added, the orientation angle can be scaled down to 20°. In an aspect, planes are grown by selecting n nearest neighbors of a seed point, and comparing the normal of the nearest neighbors to the plane normal. If the normal does not deviate from the plane normal beyond an angle threshold ranging between and including 40-60º, the neighbors can be added to grow the plane. Other plane-growing techniques are contemplated by the present teachings.

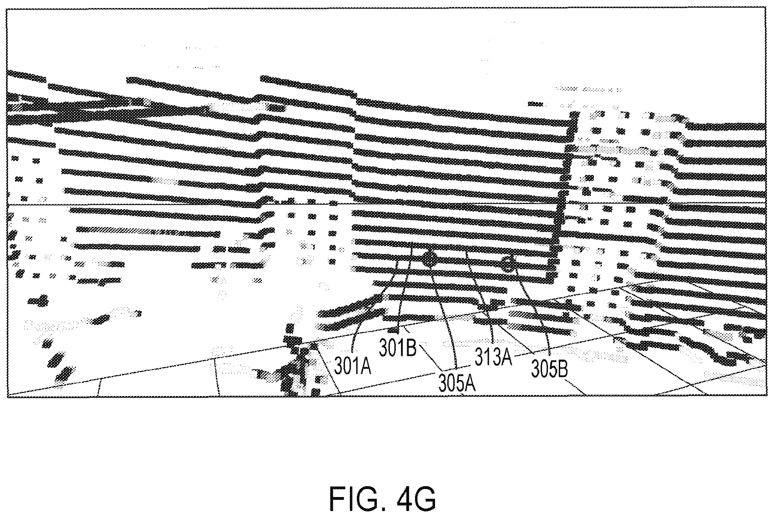

Referring now to FIG. 4G, all points remaining from previous filter steps stated herein can be evaluated for their inclusion in polygon 313A. The edges of polygon 313A can be defined by first/second points 305A/305B and rings 301A/B.

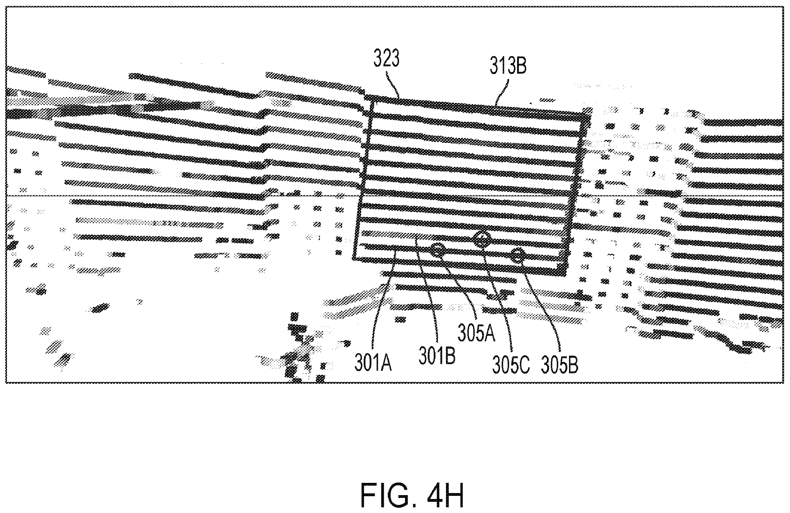

Referring now to FIG. 4H, the plane can be grown in four directions and vertically, forming polygon 313B. Growing the plane can include evaluating points in all four directions away from the autonomous vehicle towards rings and along azimuth angles that are farther and farther from originally-chosen polygon 313A of points. The plane can be grown as described herein, and the plane equation can be updated based on the newly-included points, and evaluated for orientation with respect to the gravity vector. Each direction can grow independently until the residual error for that side breaks the threshold or if the side reaches edge 323 of the point cloud. At that time, orientation and residual error checks can be made and, if passed, the plane can be classified as preliminarily significant. Additional checks like number of points, number of growth cycles, and number of vertical growth cycles etc. can be performed to assist in further filtering. For example, if a plane has experienced ten lateral growth cycles or two vertical growth cycles and the plane is not deemed significant, plane growth for that plane can be terminated.

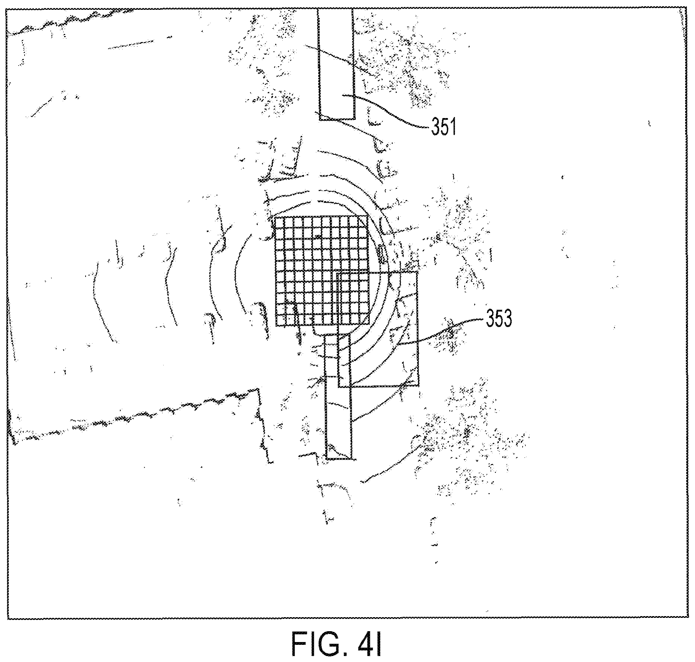

Referring now to FIG. 4I, data from rings 353 can be assessed as described herein to form planes 351. From the set of significant planes, surface planes can be identified by subjecting the planes to a scoring function such as, for example, but not limited to:

$$Residual\ Score = \begin{cases} 100 & \text{if, } residual\_error < 0.001 \\ \dfrac{-10000 * residual\_error}{9 + \left(\dfrac{910}{9}\right)} & \text{if, } 0.001 \leqslant residual\_error < 0.01 \\ \dfrac{-1000 * residual\_error}{9} + \left(\dfrac{820}{9}\right) & \text{if, } 0.01 \leqslant residual\_error < 0.1 \\ -200 * residual\_error + 100 & \text{if, } 0.1 \leqslant residual\_error \end{cases}$$

$$Growth\ Score = \begin{cases} 100 & \text{if, } num\_vGrowth > 4 \\ 10 * num\_vGrowth + 60 & \text{if, } num\_vGrowth \leqslant 4 \end{cases}$$

$$Area\ Score = \frac{\arctan(0.7 * planeArea) * 180}{\pi} + 10$$

$$Angle\ Score = \begin{cases} 100 & \text{if, } angle \leqslant 15 \\ \dfrac{-20 * angle}{3} + 200 & \text{if, } angle > 15 \end{cases}$$

$$Final\ Score = Residual\ Score + Growth\ Score + Area\ Score + Angle\ Score$$

The scoring function can be used to assess the quality of the planes, higher scores indicate more likely candidates, and planes that don't meet a pre-selected threshold are discarded. The angle score refers to how close a plane is to being a vertical or a ground plane.

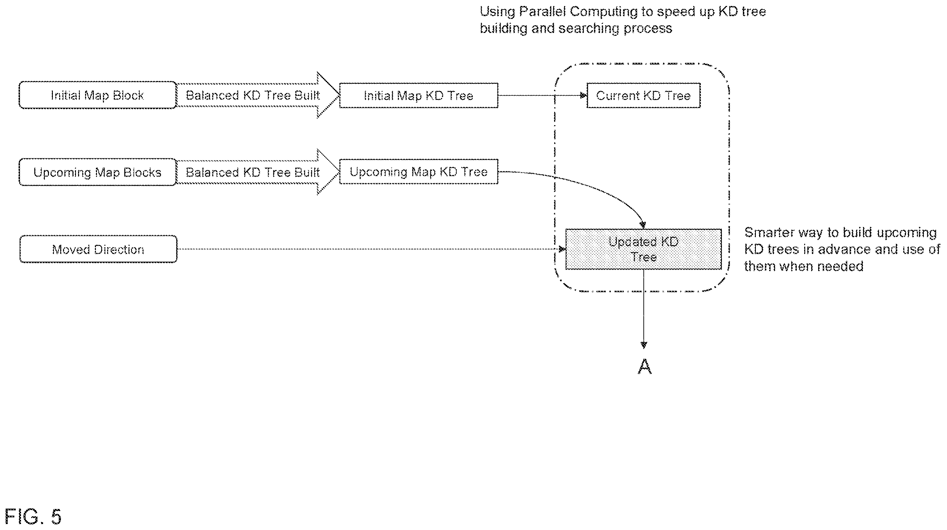

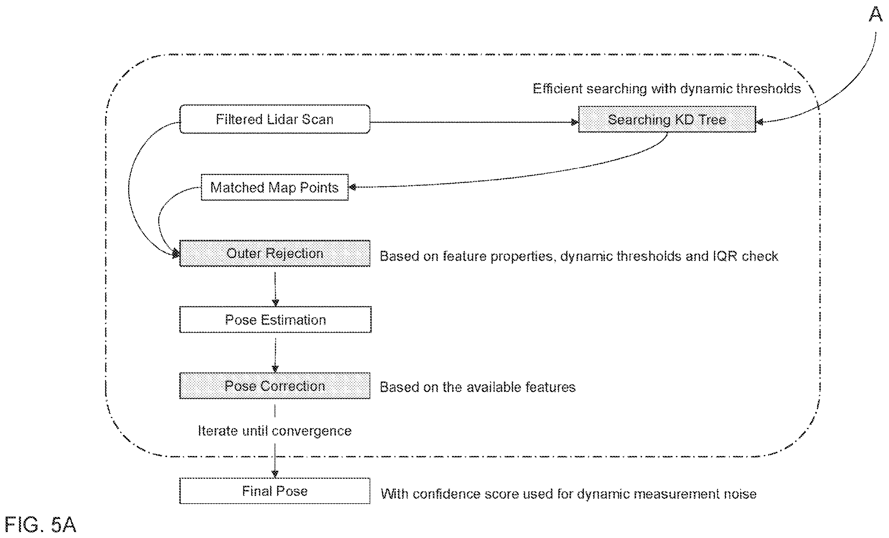

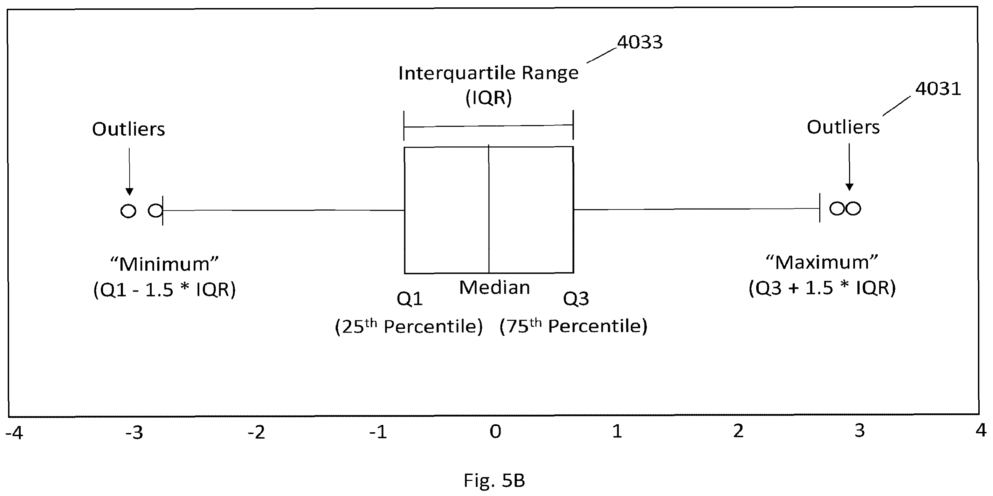

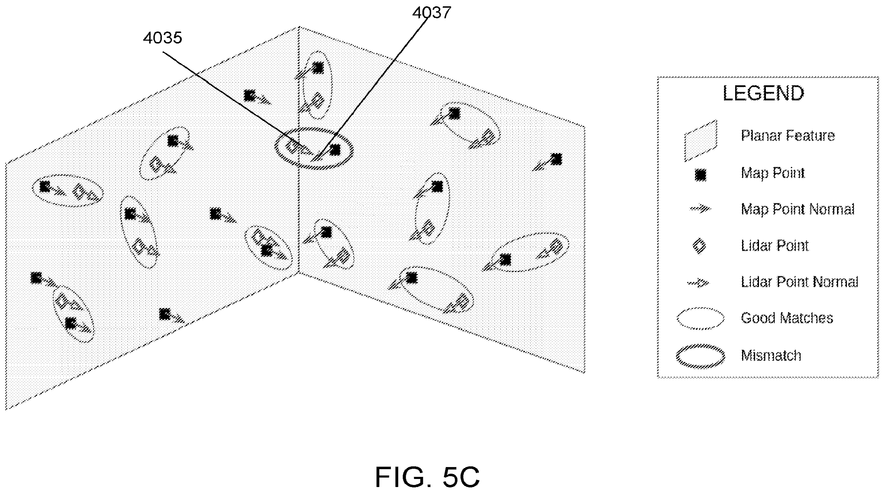

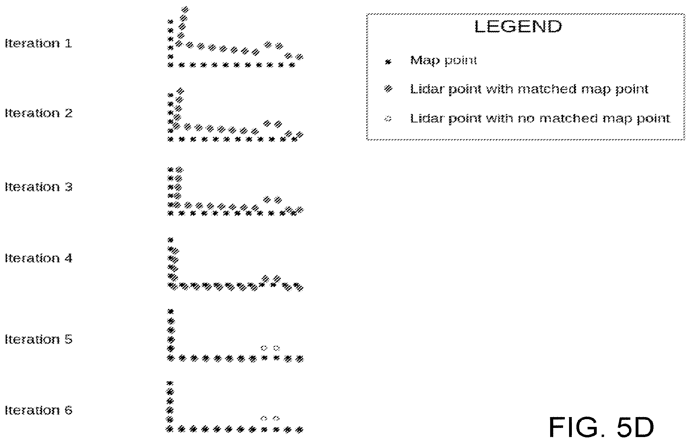

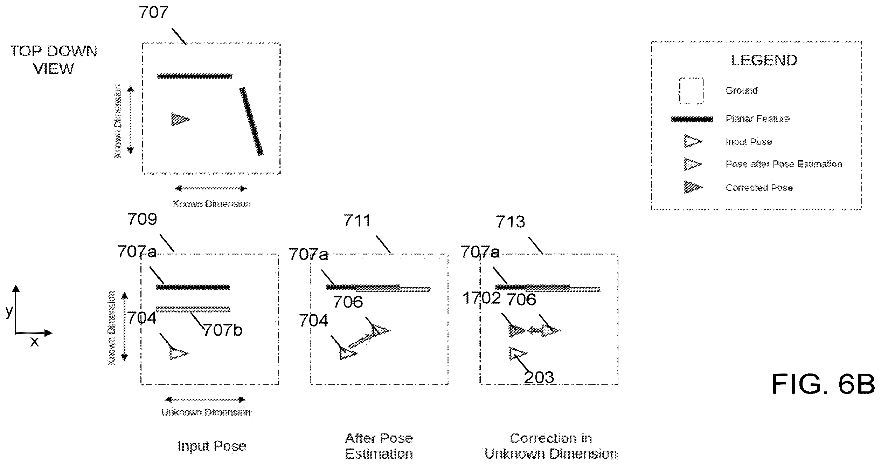

Referring now to FIG. 5, feature matching according to the present teachings matches map data with real time data to provide a final pose. Different feature matching methods are used for different types of features. For planar/surface features, map localization method is used to match map planar points data to real time planar points data. For curvature points (points that lie on planes as well as curved surfaces), scan matching method is used to match map raw points data to real time curvature points data. Processing the map data is described herein with respect to FIGs. 2A-2B and 3A-3C. Processing the real time data is described herein with respect to FIGs. 4A-4I. Scan matching according to an exemplary heterogeneous computing environment of the present teachings includes tasks that are performed by a first processor, and tasks that are performed by a second processor, the two processors exchanging data and handshaking control. In an aspect, the first processor is a sequential processor while the second processor is a parallel processor such as, for example, but not limited to, a multi-function unit such as a graphic processing unit, multiple execution units/cores, and multiple hardware threads. The process begins with the first processor's organizing the map data corresponding to a pre-selected area around the location of the autonomous vehicle. The organization can include building, for example, a balanced k-d tree from the map data. A second step includes performing the same organization and provision of blocks of data of a pre-selected size surrounding the originally-provided data. The direction of movement of the autonomous vehicle and the k-d trees of the blocks of data associated with the autonomous vehicle are provided together, with the filtered real time data as described herein, to an efficient search algorithm dynamically detecting and speeding up the searching process, and are used to produce matched map points. Outliers from the matched points are rejected. One process for rejecting outliers is the interquartile range (IQR) method in which values outside of the fence of the IQR are rejected as outliers. Another filtering process evaluates the matches from searching the k-d tree by rejecting points in which the angle between a real-time data normal and a map data point normal exceeds a threshold. In another filtering process, points are rejected that don't lead to convergence during iterations of the ICP process. These filtered matched map points are used to estimate the pose (using UKF, for example, as described herein) and the confidence in the pose, and pose correction according to FIG. 6B is performed.

Referring now to FIG. 5A, k-d trees are spatial data structures used for efficient closest point searching. The k-d tree divides the spatial space into partitions in multiple dimensions depending on the depth level of the k-d tree. The partitions are used to efficiently search nearby points and reject faraway points. In general, map points within a threshold distance from the real-time point are examined via the k-d tree. Efficiency of k-d tree searching depends on the searching threshold used and how quickly the closest points are reached down the k-d tree. As the algorithm iterates, forcing the real-time data to converge on the map data, the searching threshold is being inversely decreased to speed up the k-d tree searching. Intelligent reduction in the threshold speeds up the convergence process. The searching threshold also depends on how far a sensor point is from the autonomous vehicle. For example, a lidar point 100 meters from the autonomous vehicle have a larger searching threshold than a lidar point which is 10 meters from the autonomous vehicle. In an aspect,

$$For\ 1 - 3\ iterations,\ distance\_threshold\ =\ 2\ +\ 0.04\ \times\ l\_dist$$

$$For\ 4 - 15\ iterations,\ distance\_threshold\ =\ (\ 2\ +\ 0.04\ \times\ l\_dist\ )\ /\ (\ 6\ \times\ (Itr\ -\ 3)\ )$$

$$For\ 16 - 20\ iterations,\ distance\_threshold\ =\ (\ 2\ +\ 0.04\ \times\ l\_dist\ )\ /\ 72$$

$$l\_dist : lidar\ point\ distance\ from\ bot$$

$$Itr : iteration\ number$$

Referring now to FIGs. 5B-5D, the system of the present teachings for map localization and scan matching uses sample data, feature information, and iterative convergence behavior to reject outliers 4031 and detect false matches. In FIG 5B, a conventional interquartile range (IQR) 4033 outlier rejection method using point-to-plane distances is used to reject data points that fall outside of the IQR range plus/minus a pre-selected distance. Further, searching a k-d tree matches LIDAR points to their closest map points irrespective of the normal direction. Thus, rejecting outliers includes detecting situations in which the closest points are not in the same planes. Shown in FIG. 5C is the situation in which the angle between LIDAR point normal 4035 and matched map point normal 4037 indicates a false match that should be rejected. In FIG. 5D, with iterations, the point-to-plane distance threshold (map localization) and point-to-point threshold (scan matching) decreases to reject matches that don't lead to convergence.

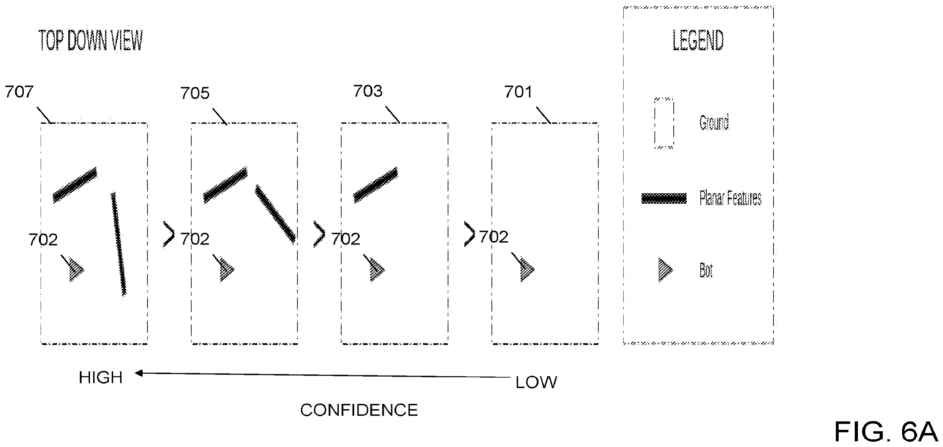

Referring now to FIG. 6A, confidence in computed pose 702 of an autonomous vehicle can be assessed by a set of steps. The confidence level is based on the number and orientation of the non-surface planar features in the travel direction of the autonomous vehicle. For example, when there are planar features that are approximately perpendicular to each other as shown in plate 707, the confidence in computed pose 702 can be assumed to be relatively high (for example, a value of 1), whereas where there are no non-surface planar features as shown in plate 701, the confidence in computed pose 702 can be assumed to be relatively low (for example, a value of 0). When there are few non-surface planar features as shown in plate 703, or when the surface planar features are oriented relatively parallel to each other as shown in plate 705, the confidence level is somewhere between relatively high and relatively low, for example, a value of .7 associated with the configuration shown in plate 705, and a value of .4 associated with the configuration shown in plate 703. In an aspect, confidence indices are assigned to various configurations. For example, an index of 1 is assigned to the relatively high confidence level in computed pose 702 associated with the planar feature configuration in plate 707, and an index of -4 is assigned to the relatively low confidence level in computed pose 702 associated with the lack of planar features as depicted in plate 701. In an aspect, the index associated with the planar features shown in plate 705 has the value of 1, and the index associated with the planar features shown in plate 703 has the value of 0. In an aspect, index values of -1, -2, and -3 are assigned to situations involving unreliable data/calculations. In an aspect, the confidence level is a function at least of the number of points on the planar feature and the angle between the planar features. An exemplary equation for computing pose confidence is

$$score\ =\ \sum_{all\ pair\ of\ planes}\left(N_1 + N_2\right)\times\cos^{-1}\left(dotProduct(n_1, n_2)\right)/(\pi/2)$$

$$N_1 : number\ of\ points\ in\ plane\ 1$$

$$N_2 : number\ of\ points\ in\ plane\ 2$$

$$n_1 : plane\ 1\ normal$$

$$n_2 : plane\ 2\ normal$$

Referring now to FIG. 6B, when there are planar features in directions as shown in plate 707 in which the confidence level is relatively high, there is no need to correct the pose. However, when, as in plate 703 (FIG. 6A) and plate 709 (FIG. 6B), there are only map planar features 707a in one direction, and LIDAR planar features 707b do not align with map planar features 707a, input pose 704 requires correction. In an aspect, the correction occurs in the direction in which autonomous vehicle 203 does not encounter a map planar feature. For example, input pose 704 is corrected in the y direction by moving input pose 704 in the y-direction the amount LIDAR planar feature 707b is moved to align with map planar feature 707a to pose estimation position 706. In the next step, pose estimation position 706 is moved in the x-direction to align with input pose 704 forming corrected pose 1702.

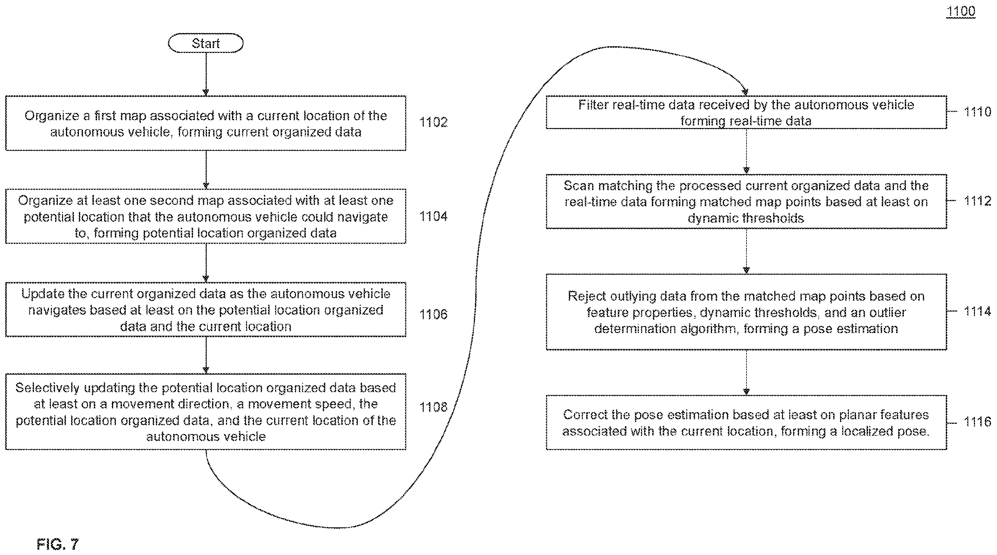

Referring now to FIG. 7, a first configuration of a method according to the present teachings for localizing an autonomous vehicle is shown. Method 1100 for localizing an autonomous vehicle includes, but is not limited to including, organizing 1102 a first map associated with a current location of the autonomous vehicle, forming current organized data, organizing 1104 at least one second map associated with at least one potential location that the autonomous vehicle could navigate to, forming potential location organized data, updating 1106 the current organized data as the autonomous vehicle navigates based at least on the potential location organized data and the current location, and selectively updating 1108 the potential location organized data based at least on a movement direction, a movement speed, the potential location organized data, and the current location of the autonomous vehicle. Method 1100 further includes filtering 1110 real-time data received by the autonomous vehicle forming real-time data, scan matching 1112 the processed current organized data and the real-time data forming matched map points based at least on dynamic thresholds, rejecting 1114 outlying data from the matched map points based on feature properties, dynamic thresholds, and an outlier determination algorithm, forming a pose estimation, and correcting 1116 the pose estimation based at least on planar features associated with the current location, forming a localized pose.

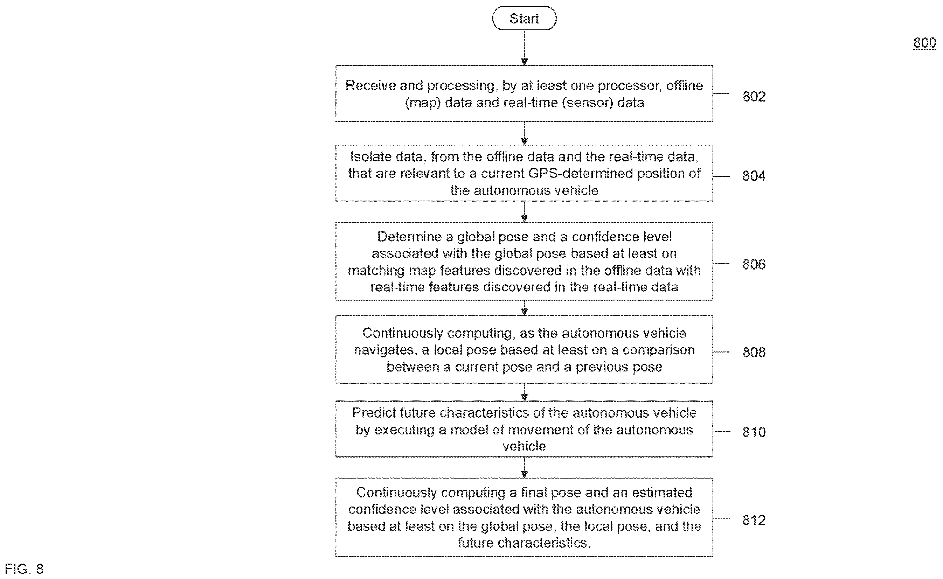

Referring now to FIG. 8, a second configuration of a method according to the present teachings for localizing an autonomous vehicle is shown. Method 800 for localizing an autonomous vehicle includes, but is not limited to including, receiving and processing 802, by at least one processor, offline (map) data and real-time (sensor) data, isolating 804 data, from the offline data and the real-time data, that are relevant to a current GPS-determined position of the autonomous vehicle, determining 806 a global pose and a confidence level associated with the global pose based at least on matching map features discovered in the offline data with real-time features discovered in the real-time data, continuously computing 808, as the autonomous vehicle navigates, a local pose based at least on a comparison between a current pose and a previous pose, predicting 810 future characteristics of the autonomous vehicle by executing a model of movement of the autonomous vehicle, and continuously computing 812 a final pose and an estimated confidence level associated with the autonomous vehicle based at least on the global pose, the local pose, and the future characteristics.

Those of skill would understand that the methods described in the subject disclosure may be applied to computer systems configured to accomplish such methods, and/or to computer-readable media containing programs to accomplish such methods, and/or to software and/or firmware and/or hardware (e.g., integrated circuits) designed to accomplish such methods. Raw data and/or results may be stored for future retrieval and processing, printed, displayed, transferred to another computer, and/or transferred elsewhere. Communication links may be wired or wireless including by way of non-limiting example Ethernet, cellular or broadband networks, WiFi or local area networks, military communications systems, and/or satellite communications systems. Parts of a system may, for example, operate on a computer having a variable number of CPUs. Other alternative computer platforms can be used.

As one skilled in the art would understand, the methods described in the subject disclosure may be, in whole or in part, implemented electronically. Signals representing actions taken by elements of the system of the subject disclosure, and other disclosed configurations, may travel over at least one live communications network. Control and data information may be electronically executed and stored on at least one computer-readable medium. The system may be implemented to execute on at least one computer node in at least one live communications network. Common forms of computer-readable media can include, for example, but not be limited to, a floppy disk, a flexible disk, a hard disk, magnetic tape or any other magnetic medium, a compact disk read only memory or any other optical medium, punched cards, paper tape, or any other physical medium with patterns of holes, a random access memory, a programmable read only memory, an erasable programmable read only memory (EPROM), a Flash EPROM or any other memory chip or cartridge, or any other medium from which a computer can read.

Those of skill in the art would understand that information and signals may be represented using any of a variety of different existing techniques. For example, data, instructions, commands, information, signals, bits, symbols, or chips that may be referenced throughout the description may be represented by voltages, currents, electromagnetic waves, magnetic fields or particles, optical fields or particles, ultrasonic waves, projected capacitance, or any combination thereof.

Those of skill would further appreciate that the various illustrative logical blocks, modules, circuits, and algorithm steps described in connection with the arrangements disclosed herein may be implemented as electronic hardware, computer software, or combinations of both. To clearly illustrate this interchangeability of hardware and software, various illustrative components, blocks, modules, circuits, and steps have been described in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the appended claims.

The various illustrative logical blocks, modules, and circuits described in connection with the arrangements disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The actions of a method or algorithm described in connection with the arrangements disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor. The processor and the storage medium may reside in an ASIC. The ASIC may reside in functional equipment such as, e.g., a computer, a robot, a user terminal, a mobile telephone or tablet, a car, or an IP camera. In the alternative, the processor and the storage medium may reside as discrete components in such functional equipment.

The above description is not intended to be exhaustive or to limit the features to the precise forms disclosed. Various alternatives and modifications can be devised by those skilled in the art without departing from the disclosure, and the generic principles defined herein may be applied to other aspects without departing from the spirit or scope of the appended claims. Accordingly, the present disclosure is intended to embrace all such alternatives, modifications and variances. Additionally, while several arrangements of the present disclosure have been shown in the drawings and/or discussed herein, it is not intended that the disclosure be limited thereto, as it is intended that the disclosure be as broad in scope as the art will allow and that the specification be read likewise. Therefore, the above description should not be construed as limiting, but merely as examples of particular configurations. And those skilled in the art will envision other modifications within the scope and spirit of the claims appended hereto. Other elements, steps, actions, methods, and techniques that are not substantially different from those described above and/or in the appended claims are also intended to be within the scope of the disclosure. Thus, the appended claims are not intended to be limited to the arrangements shown and described herein, but are to be accorded the broadest scope consistent with the principles and novel features disclosed herein.

The arrangements shown in drawings are presented only to demonstrate certain examples of the disclosure. And, the drawings described are merely illustrative and are non-limiting. In the drawings, for illustrative purposes, the size of some of the elements may be exaggerated and not drawn to a particular scale. Additionally, elements shown within the drawings that have the same numbers may be identical elements or may be similar elements, depending on the context.

Where the term "comprising" is used in the present description and claims, it does not exclude other elements or steps. Where an indefinite or definite article is used when referring to a singular noun, e.g. "a" "an" or "the", this includes a plural of that noun unless something otherwise is specifically stated. Hence, the term "comprising" should not be interpreted as being restricted to the items listed thereafter; it does not exclude other elements or steps, and so the scope of the expression "a device comprising items A and B" should not be limited to devices consisting only of components A and B. Furthermore, to the extent that the terms "includes," "has," "possesses," and the like are used in the present description and claims, such terms are intended to be inclusive in a manner similar to the term "comprising," as "comprising" is interpreted when employed as a transitional word in a claim.

Furthermore, the terms "first", "second", "third" and the like, whether used in the description or in the claims, are provided to distinguish between similar elements and not necessarily to describe a sequential or chronological order. It is to be understood that the terms so used are interchangeable under appropriate circumstances (unless clearly disclosed otherwise) and that the embodiments of the disclosure described herein are capable of operation in other sequences and/or arrangements than are described or illustrated herein.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

The present application is a divisional application originating from EP 24719418.6. EP 24719418.6 originates from PCT/US2024/021409. The original claims of PCT/US2024/021409 are presented as statements below so that the subject-matter of those 35 claims is includes in its entirety in the present applications.

Statement 1. A method for localizing an autonomous vehicle comprising:

organizing a first map associated with a current location of the autonomous vehicle, forming current organized data;

organizing at least one second map associated with at least one potential location that the autonomous vehicle could navigate to, forming potential location organized data;

updating the current organized data as the autonomous vehicle navigates based at least on the potential location organized data and the current location;

selectively updating the potential location organized data based at least on a movement direction, a movement speed, the potential location organized data, and the current location of the autonomous vehicle;

filtering real-time data received by the autonomous vehicle forming real-time data;

scan matching the processed current organized data and the real-time data forming matched map points based at least on dynamic thresholds;

rejecting outlying data from the matched map points based on feature properties, dynamicthresholds, and an outlier determination algorithm, forming a pose estimation; and

correcting the pose estimation based at least on planar features associated with the current location, forming a localized pose.

Statement 2. The method as in statement 1 further comprising receiving the first map from a source remoteto the autonomous vehicle.

Statement 3. The method as in statement 1 further comprising accessing the first map from a databasestored local to the autonomous vehicle.

Statement 4. The method as in statement 1 further comprising receiving the at least one second map froma source remote to the autonomous vehicle.

Statement 5. The method as in statement 1 further comprising accessing the at least one second map froma database stored local to the autonomous vehicle.

Statement 6. The method as in statement 1 wherein selectively updating comprises:

determining if the autonomous vehicle is located in a border region between the first map and the at least one second map; and

updating the potential location organized data when the autonomous vehicle navigates outside of the border region and the first map.

Statement 7. The method as in statement 1 wherein the filtering real-time data comprises:
downsampling the real-time data according to pre-selected criteria forming downsampled data.

Statement 8. The method as in statement 7 wherein the pre-selected criteria are selected from comprise user-defined criteria; default criteria; dynamically-determined criteria; a pre-selected density; and combinations thereof.

Statement 9. The method as in statement 1 further comprising segregating the first map and the at least one second map into planar points and non-planar points.

Statement 10. The method as in statement 9 further comprising removing the non-planar points.

Statement 11. The method as in statement 9 further comprising identifying planar points as points belonging to non-ground planes.

Statement 12. The method as in statement 9 further comprising:identifying planar points including:

(a) selecting a random point from the downsampled data;

(b) locating point neighbors of the random point;

(c) identifying the planar points in the down sampled data as points that lie on a planar plane formed by the random point and the point neighbors, if any;

(d) identifying the non-planar points as not the planar points; and

(e) repeating steps (a)-(d) until (1) there are no more of the down sampled data to be examined, or a pre-selected number of the planar planes has been achieved, or a pre-selected number of iterations of steps (a)-(d) has been executed.

Statement 13. The method as in statement 7 further comprising forming real-time planes that are grown to outliers from a plurality of scans of the down sampled real-time data.

Statement 14. The method as in statement 13 further comprising: determining discontinuities in the real-time planes; and removing points that are part of the discontinuities.

Statement 15. The method as in statement 12 further comprising:

forming real-time planes that are grown to outliers from a plurality of scans of thedown sampled real-time data; and

matching the real-time planes with the planar planes.

Statement 16. The method as in statement 12 wherein organizing the first map comprises creating a k- dimensional tree from the first map and/or creating, by a parallel processor, a plurality of k-dimensional trees from the first map and the at least one second map.

Statement 17. The method as in statement 12 wherein organizing the first map data set and the at least one second map comprises creating a plurality of k-dimensional trees from the first map data set and the at least one second map.

Statement 18. The method as in statement 6 wherein the border region comprises a width that is dynamically determined based at least on a speed of the autonomous vehicle, a number and a type of obstacles surrounding the autonomous vehicle, and/or characteristics of an environment surrounding the autonomous vehicle.

Statement 19. A method for localizing an autonomous vehicle comprising:

receiving and processing, by at least one processor, offline (map) data and real-time (sensor) data;
isolating data, from the offline data and the real-time data, that are relevant to a current GPS-determined position of the autonomous vehicle;
determining a global pose and a confidence level associated with the global pose based at least on matching map features discovered in the offline data with real-time features discovered in the real-time data;
continuously computing, as the autonomous vehicle navigates, a local pose based at least on a comparison between a current pose and a previous pose;
predicting future characteristics of the autonomous vehicle by executing a model of movement of the autonomous vehicle; and
continuously computing a final pose and an estimated confidence level associated with the autonomous vehicle based at least on the global pose, the local pose, and the future characteristics.

Statement 20. The method as in statement 19 further comprising collecting the offline data and the real-time data during different time periods and/or by a common vehicle.

Statement 21. The method as in statement 19 wherein computing the local pose comprises:

measuring linear and angular velocity of the autonomous vehicle;
measuring a local heading of the autonomous vehicle;
estimating, using data gathered by an image sensor, an image pose of the autonomous vehicle based at least on previous and current images of the autonomous vehicle;

estimating, using data gathered by a laser sensor, a laser pose of the autonomous vehicle based at least on previous and current poses of the autonomous vehicle; and

computing the local pose based at least on combining the linear and angular velocity, the local heading, the estimated image pose, and the estimated laser pose.

Statement 22. The method as in statement 19 wherein the model is selected from: a constant velocity autonomous vehicle; a movement model for the autonomous vehicle; a dynamically-updated movement model for the autonomous vehicle; and combinations thereof.

Statement 23. The method as in statement 19 wherein continuously computing the final pose comprises submitting the global pose, the local pose, and the future characteristics to a Bayesian state estimator.

Statement 24. A system for localization of an autonomous vehicle comprising:

at least one first processor configured to receive and filter sensor data and map data associated with the autonomous vehicle;
a second processor configured to segregate sensor data features of interest in the filtered sensor data and map data features of interest the filtered map data;
a third processor configured to match the sensor data features of interest with the map data features of interest;
a fourth processor configured to perform registration on the matched data creating a global pose;
a fifth processor gathering local pose information based at least on linear and angular velocity of the autonomous vehicle, a heading of the autonomous vehicle, an image pose estimation of the autonomous vehicle, and a laser pose estimate of the autonomous vehicle;
a sixth processor predicting future motion of the autonomous vehicle; and
a seventh processor computing a final pose of the autonomous vehicle based at least on the global pose, the local pose information and the future motion.

Statement 25. The system as in statement 24 wherein the registration comprises an iterative closest pointalgorithm.

Statement 26. The system as in statement 24 wherein the first processor comprises: instructions executing to filter the map data:

(f) downsample the filtered sensor data creating downsampled data;

(g) create submaps of the downsampled data;

(h) select a random point from the downsampled data;

(i) locate point neighbors of the random point;

(j) identify planar points in the downsampled data as points that lie on a planar plane formed by the random point and the point neighbors, if any;

(k) identify non-planar points as not the planar points; and

(l) repeating steps (a)-(f) until (1) there are no more of the downsampled data to be examined, or a pre-selected number of the planar planes has been achieved, or a pre-selected number of iterations of steps (a)-(d) has been executed.

Statement 27. The system as in statement 24 wherein the first processor comprises:

a ground plane processor determining ground planes from point cloud data received from a sensor, each of the ground planes being associated with a ground plane equation, the sensor having a sensor frame of reference; and

a plane transform processor transforming the ground plane equation from the sensor frame of reference to a vehicle frame of reference associated with the autonomous vehicle.

Statement 28. The system as in statement 27 wherein the ground plane processor comprises:

a median processor computing a median of at least two rings of the point cloud data;

a point cloud filter filtering the point cloud data based at least on a distance of the points in the point cloud data from the median;

a plane creation processor creating planes from the filtered point cloud data, each of the created planes having at least one azimuth angle;

a plane growth processor growing the created planes from the point cloud data extending away from the autonomous vehicle along the at least one azimuth angle forming grown planes; and

a selection processor choosing the ground planes from the grown planes based at least on an orientation and residual error of each of the created planes.

Statement 29. The system as in statement 28 wherein the plane creation processor comprises: executable code including computer instructions:

selecting a first point and a second point from a first ring of sensor data, the first point and the second point lying within boundaries formed by discontinuities in the point cloud data on the first ring, the first point having a first azimuth angle and the second point having a second azimuth angle;

selecting a third point from a second ring of sensor data, the second ring being adjacent to the first ring, the third point having a third azimuth angle between the first azimuth angle and the second azimuth angle; and

creating one of the planes including the first point, the second point, and the third point.

Statement 30. The system as in statement 27 further comprising executable code including computer instructions substituting a default plane when none of the ground planes can be determined.

Statement 31. The system as in statement 27 further comprising executable code including computer instructions removing the points from the point cloud data if the points exceed a pre-selected distance from the autonomous vehicle.

Statement 32. The system as in statement 27 further comprising executable code including computer instructions removing the points from the point cloud data if the points exceed a pre-selected height based at least on a vehicle height of the autonomous vehicle.

Statement 33. The system as in statement 27 further comprising executable code including computer instructions removing the points from the point cloud data if the points are within a pre-selected distance from the autonomous vehicle.

Statement 34. The system as in statement 27 wherein transforming the ground planes comprises:
executable code including computer instructions:

computing a unity vector from coefficients of the ground plane equation, the ground plane equation including ax+by+cz+d=O, the coefficients including a, b, and c, a constant

$$\hat{u} = \left[ \frac{a}{\sqrt[2]{a^2 + b^2 + c^2}} \quad \frac{b}{\sqrt[2]{a^2 + b^2 + c^2}} \quad \frac{c}{\sqrt[2]{a^2 + b^2 + c^2}} \right]$$

normalizing the d constant;

$$a_{norm} \quad " \, \frac{d}{\sqrt{a2} + b2 + c2}$$

transforming the a, b, c coefficients of the ground plane equation based on a rotation/translation matrix and the unity vector; and

$$\bar{v} = [R \mid t]_{3x4} \begin{bmatrix} \bar{u} \\ 0 \end{bmatrix}_{4x1} = \begin{bmatrix} a' \\ b' \\ c' \end{bmatrix}_{3x1}$$

transforming the normalized d constant based on the normalized d constant, the rotation/translation matrix, the unity vector, and the transformed a, b, c coefficients,

$$[R \mid t]_{3x4} \begin{bmatrix} -d_{norm} * \bar{u}_x \\ -d_{norm} * \bar{u}_y \\ -d_{norm} * \bar{u}_z \end{bmatrix} = \begin{bmatrix} \tilde{d}_x \\ \tilde{d}_y \\ \tilde{d}_z \end{bmatrix}$$

$$a' * \tilde{d}_x + b' * \tilde{d}_y + c' * \tilde{d}_z + d' = 0$$

Statement 35. The method as in statement 19 wherein said determining the estimated confidence level comprises assessing a number and orientation of planar features in a travel direction of the autonomous vehicle.

**Claims**

1. Method (800) of localizing a vehicle comprising:

   isolating (804) data, from offline data (505) and real-time data (501), that are relevant to a current GPS-determined position of the vehicle;
   determining (806) a global pose and a confidence level associated with the global pose based on matching map features discovered in the offline data (505) with real-time features discovered in the real-time data (501);
   computing (808) a local pose based on comparing a current pose and a previous pose;
   predicting (810) future characteristics of the vehicle by executing a model (117); and
   computing (812) a final pose (111) and an estimated confidence (702) level based on the global pose, the local pose, and the future characteristics.

2. Method of claim 1, further comprising collecting the offline data (505) and the real-time data (501) during different time periods.

3. Method of claim 1 or claim 2, wherein said computing comprises:

   first estimating an image pose of the vehicle based on a previous image of the vehicle and a current image of the vehicle, defining an estimated image pose;
   second estimating a laser pose of the vehicle based on the previous pose and the current pose, defining an estimated laser pose; and
   second computing the local pose based on a linear velocity of the vehicle and an angular velocity of the vehicle, the local heading, the estimated image pose, and the estimated laser pose.

4. Method of any preceding claim, wherein the model (117) is selected from: a constant velocity vehicle; a movement model for the vehicle; a dynamically-updated movement model for the vehicle; and combinations thereof.

5. Method of any preceding claim, further comprising third computing (812) a final pose (111) comprising submitting the global pose, the local pose, and the future characteristics to a Bayesian state estimator.

6. Method of any preceding claim, wherein said determining the confidence level comprises assessing a number and an orientation of planar features in a travel direction of the vehicle.

7. Method of localizing an autonomous vehicle comprising:

   segregating sensor data features of interest and map data features of interest;
   matching the sensor data features with the mapdata features, defining matched data;
   registering the matched data, defining a global pose;
   predicting a future motion of the vehicle; and
   computing a final pose of the vehicle based onthe global pose, local pose information and the future motion.

8. Method of claim 7, wherein said registering comprises an iterative closest point algorithm.

9. Method of claim 7 or claim 8, further comprising filtering the map data (505), defining filtered map data.

10. Method of claims 7 to 9 further comprising:

    determining ground planes from point cloud data (201) having a sensor frame of reference, each associated with a ground plane equation; and
    transforming the ground plane equation from the sensor frame of reference to a vehicle frame of reference associated with the vehicle.

11. Method of claim 10, further comprising computing a median (307 A/B) of two rings (301A, 301B, 301N) of the point cloud data (201);

    filtering the point cloud data based (201) on a distance of the points in the point cloud data from the median (307A, 307B), defining filtered point cloud data;
    creating, from the filtered point cloud data, planes (351) each having an azimuth angle, defining created planes (351);
    growing the created planes (351) from the point cloud data (201) extending away from the vehicle along the azimuth angle, defining grown planes; and
    choosing ground planes from the grown planes based on an orientation and residual error of the created planes (351).

12. Method of claim 11, further comprising:

    selecting a first point (305A) and a second point (305B) from a first ring (301A), lying within boundaries defined by discontinuities (309A, 309B) in the point cloud data on the first ring (301A), the first point (305A) having a first azimuth angle and the second point (305B) having a second azimuth angle;
    selecting a third point (305C) from a second ring (301B) that is adjacent to the first ring (301A), wherein the third point (305C) has a third azimuth angle between the first azimuth angle and the second azimuth angle; and
    creating one of the planes including the first point (305A), the second point (305B), and the third point (305C).

13. Method of in claims 9 to 12, further comprising substituting a default plane when no ground planes can be determined.

14. Method of claims 9 to 13, further comprising removing points from the point cloud data that exceed a distance from the vehicle.

15. Method of claims 9 to 14, further comprising removing the points from the point cloud data that exceed a height based on a vehicle height of the vehicle.

**16.** Method of claims 9 to 15, further comprising removing the points from the point cloud data within a distance from the vehicle.

**17.** Method of claims 9 to 16, wherein said transforming comprises: executable code including computer instructions: computing a unity vector from coefficients of the ground plane equation comprising ax+by+cz+d=0 wherein the coefficients comprise a, b, and c, a constant comprises d;

$$\hat{u} = \left[ \frac{a}{\sqrt[2]{a^2 + b^2 + c^2}}, \quad \frac{b}{\sqrt[2]{a^2 + b^2 + c^2}}, \quad \frac{c}{\sqrt[2]{a^2 + b^2 + c^2}} \right]$$

normalizing the d constant;

$$d_{norm} = \frac{d}{\sqrt[2]{a^2 + b^2 + c^2}}$$

transforming the a, b, c coefficients based on a rotation/translation matrix and the unity vector; and

$$\bar{v} = [R \mid t]_{3x4} \begin{bmatrix} \hat{u} \\ 0 \end{bmatrix}_{4x1} = \begin{bmatrix} a' \\ b' \\ c' \end{bmatrix}_{3x1}$$

transforming the normalized d constant based on the normalized d constant, the rotation/translation matrix, the unity vector, and the transformed a, b, c coefficients,

$$\bar{d} = [R \mid t]_{3x4} \begin{bmatrix} -d_{norm} * \hat{u}_x \\ -d_{norm} * \hat{u}_y \\ -d_{norm} * \hat{u}_z \end{bmatrix} = \begin{bmatrix} \tilde{d}_x \\ \tilde{d}_y \\ \tilde{d}_z \end{bmatrix}$$

$$a' * \tilde{d}_x + b' * \tilde{d}_y + c' * \tilde{d}_z + d' = 0 \, .$$

**18.** Method of claim 2, wherein said collecting is performed by a common vehicle.

**19.** Method of claim 3, wherein said estimating comprises data from an image sensor.

**20.** Method of claim 3, wherein said second estimating comprises data from a laser sensor.

**21.** Method of claim 7, further comprising a fifth processor gathering local pose information based at least on linear and angular velocity of the autonomous vehicle, a heading of the autonomous vehicle, an image pose estimation of the autonomous vehicle, and a laser pose estimate of the autonomous vehicle

**22.** Method of claim 9 wherein:

the sensor data is filtered, defining filtered sensor data; and
said filtering comprises:

a. down sampling the filtered sensor data, defining down sampled data (205);

b. creating submaps (207A-207D) based on the down sampled data (205);

c. selecting a random point (209) from the down sampled data (205);

d. locating point neighbors (211) of the random point (209);

e. defining planar points (4003) in the down sampled data that lie on a plane (215, 221) defined by the random point (209) and the point neighbors (211);

f. identify non-planar points (4001) as not the planar points; and

g. repeating steps (a)-(f) until:

> (1) no down sampled data (205) remain to be examined;
> (2) a number of the planes are identified; or
> (3) a second number of iterations of steps (a)-(d) were executed.

**23.** System for localizing an autonomous vehicle comprising a processor configured for the method of claim 1.

**24.** Non-transient, computer-readable medium configured for storing instructions configured for the method of claim 1.

**25.** System for localizing an autonomous vehicle comprising a processor configured for the method of claim 7.

**26.** Non-transient, computer-readable medium configured for storing instructions configured for the method of claim 7.

FIG. 1

FIG. 1A

Fig. 1H

Fig. 1I

FIG. 1B

Border Area

Block (3,8)

80 m

x m

Block (4,9)

Block (4,8)

Block (4,7)

Block (3,9)

Block (3,8)

Block (3,7)

Block (2,9)

Block (2,8)

Block (2,7)

80 m

FIG. 1C

EP 4 745 625 A2

FIG. 1D

FIG. 1E

FIG. 1F

EP 4 745 625 A2

FIG. 1G

TOP DOWN
VIEW

| | | |
|---|---|---|
| Upc Block 0 | Upc Block 1 | Upc Block 2 |
| Upc Block 3 | Current Block | Upc Block 4 |
| Upc Block 5 | Upc Block 6 | Upc Block 7 |

14011

Uses current block to build KD tree.
Builds neighboring blocks as upcoming KD trees.

| | | |
|---|---|---|
| Upc Block 0 | Upc Block 1 | Upc Block 2 |
| Upc Block 3 | Current Block | Upc Block 4 |
| Upc Block 5 | Upc Block 6 | Upc Block 7 |

4019

Bot about to cross a block.

**FIG. 1H**

LEGEND

Current Block

Neighboring Block

Bot

EP 4 745 625 A2

EP 4 745 625 A2

|  | Upc Block 0 | Upc Block 1 | Upc Block 2 |
| Upc Block 3 | | Current Block → | |
| Upc Block 5 | Upc Block 6 | Upc Block 7 |

Uses one of previous upcoming KD tree as current KD tree.

4013

| Upc Block 0 | Upc Block 1 | Upc Block 2 |
| Upc Block 3 | Current Block → | Upc Block 4 |
| Upc Block 5 | Upc Block 6 | Upc Block 7 |

Builds next set of neighboring blocks as upcoming KD trees.

4017

FIG. 1I

FIG. 2A

150

151 — PC DATA

153 — DOWNSAMPLE #1 — 152 — PUBLISH DOWNSAMPLED DATA

141 — DOWNSAMPLE #2

155 — CREATE SUBMAPS

157 — MORE SUBMAPS TO LOOP THROUGH?

169 — ANOTHER SUBMAP SIZE?

171 — NO — FEATURE EXTRACTION

173 — MORE FEATURES TO INSPECT?

179 — POINT-PLANE MATCHING

175 — IS PLANE GROUND PLANE?

177 — DOWNSAMPLING THE GROUND POINT CLOUD USING A FIRST SET OF PARAMETERS

178 — DOWNSAMPLING THE GROUND POINT CLOUD USING A SECOND SET OF PARAMETERS

159 — SELECT RANDOM POINT, COUNT ITERATIONS

161 — POINT AVAILABLE?

163 — FIND K CLOSEST NEIGHBORS IN KD TREE

165 — NEIGHBORS SPAN A PLANE?

167 — GET PLANE NORMAL TO SPANNED PLANE

37

EP 4 745 625 A2

B

183 — ENOUGH GROUND PLANES IN LIST? —YES→ 193 — PLANE NORMAL SATISFIES GROUND PLANE RQMTS? —NO→ A

150

NO↓

184 — PLANE NORMAL SATISFIES NON-GROUND PLANE RQMTS? —NO→ A

192 ↓YES

TAG AS GROUND

185 ↓YES

CALCULATE # POINTS ON SPANNED PLANE (INLIERS)

187 — #INLIERS > THRESHOLD? —NO→ A

↓YES

189 — SPANNED PLANE BELONGS TO PREVIOUS PLANE? —NO→ 195 REPLACE WHEN DUPLICATE PLANE ON GROUND PLANE LIST

191 ↓YES

MERGE ALL INLIERS AND REFIT PLANE

C

197 GO THROUGH GROUND PLANE LIST, APPEND POINTS AND PLANE NORMALS TO FEATURE MAP

↑YES

199 — ENOUGH PLANES FIT? OR MAX ITERATIONS? OR # PTS LEFT < THRESHOLD? —NO→ A

FIG. 2B

Point cloud data 201

Downsample #1 1203

Downsample #2 205

207A 207B 207C 207D

Submaps, loop through
Each one

FIG. 3A

FIG. 3B

FIG. 3C

START → RECEIVE POINT CLOUD DATA FROM A SENSOR 1351

→ FILTER DATA OVER MEDIAN IN 1D 1353

→ CREATE PLANES, GROW PLANES TO OUTLIERS 355

→ CHOOSE SIGNIFICANT PLANES 357

→ END

350

# FIG. 4A

FIG. 4B

FIG. 4C

FIG. 4D

301A

301B

305A 305C

305B

FIG. 4E

FIG. 4F

FIG. 4G

FIG. 4H

FIG. 4I

Using Parallel Computing to speed up KD tree
building and searching process

| Initial Map Block | Balanced KD Tree Built | Initial Map KD Tree | → Current KD Tree |

| Upcoming Map Blocks | Balanced KD Tree Built | Upcoming Map KD Tree |

| Moved Direction | ...... | Updated KD Tree |

Smarter way to build upcoming
KD trees in advance and use of
them when needed

A

FIG. 5

EP 4 745 625 A2

Efficient searching with dynamic thresholds

Filtered Lidar Scan → Searching KD Tree

Matched Map Points

Outer Rejection — Based on feature properties, dynamic thresholds and IQR check

Pose Estimation

Pose Correction — Based on the available features

Iterate until convergence

Final Pose — With confidence score used for dynamic measurement noise

A

FIG. 5A

Fig. 5B

FIG. 5C

Iteration 1

Iteration 2

Iteration 3

Iteration 4

Iteration 5

Iteration 6

LEGEND

*    Map point

   Lidar point with matched map point

   Lidar point with no matched map point

FIG. 5D

FIG. 6A

EP 4 745 625 A2

TOP DOWN VIEW

707

Known Dimension

Known Dimension

709

707a

704

707b

Unknown Dimension

Input Pose

711

707a

706

704

After Pose Estimation

713

707a

1702 706

203

Correction in Unknown Dimension

LEGEND

Ground

Planar Feature

Input Pose

Pose after Pose Estimation

Corrected Pose

FIG. 6B

```
                    ┌──────────┐
                    │  Start   │
                    └──────────┘
                          │
                          ▼
```

| | |
|---|---|
| Organize a first map associated with a current location of the autonomous vehicle, forming current organized data | 1102 |

| | |
|---|---|
| Organize at least one second map associated with at least one potential location that the autonomous vehicle could navigate to, forming potential location organized data | 1104 |

| | |
|---|---|
| Update the current organized data as the autonomous vehicle navigates based at least on the potential location organized data and the current location | 1106 |

| | |
|---|---|
| Selectively updating the potential location organized data based at least on a movement direction, a movement speed, the potential location organized data, and the current location of the autonomous vehicle | 1108 |

| | |
|---|---|
| Filter real-time data received by the autonomous vehicle forming real-time data | 1110 |

| | |
|---|---|
| Scan matching the processed current organized data and the real-time data forming matched map points based at least on dynamic thresholds | 1112 |

| | |
|---|---|
| Reject outlying data from the matched map points based on feature properties, dynamic thresholds, and an outlier determination algorithm, forming a pose estimation | 1114 |

| | |
|---|---|
| Correct the pose estimation based at least on planar features associated with the current location, forming a localized pose. | 1116 |

FIG. 7

EP 4 745 625 A2

```
            ┌─────────┐
            │  Start  │
            └────┬────┘
                 │
                 ▼
```

Receive and processing, by at least one processor, offline (map) data and real-time (sensor) data — 802

Isolate data, from the offline data and the real-time data, that are relevant to a current GPS-determined position of the autonomous vehicle — 804

Determine a global pose and a confidence level associated with the global pose based at least on matching map features discovered in the offline data with real-time features discovered in the real-time data — 806

Continuously computing, as the autonomous vehicle navigates, a local pose based at least on a comparison between a current pose and a previous pose — 808

Predict future characteristics of the autonomous vehicle by executing a model of movement of the autonomous vehicle — 810

Continuously computing a final pose and an estimated confidence level associated with the autonomous vehicle based at least on the global pose, the local pose, and the future characteristics. — 812

800

FIG. 8

**EP 4 745 625 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 24719418

- US 2024021409 W

### Non-patent literature cited in the description

- **MILSTEIN et al.** Localization with Dynamic Motion Models. *International Conference on Informatics in Control, Automation, and Robotics (ICINCO*, 2006
- **MONTELLA, C**. *The Kalman Filter and Related Algorithms: A Literature Review*, May 2011, https://www.researchgate.net/publication/236897001

- The Unscented Kalman Filter. **WAN et al.** Kalman Filtering and Neural Networks. John Wiley & Sons, Inc, October 2001
- Linear Least-Squares Optimization for Point-to-Plane ICP Surface Registration. **LOW**. Technical Report TR04-004. Department of Computer Science, University of North Carolina, February 2004